# EUROPEAN PATENT SPECIFICATION

(11) **EP 1 143 661 B1**
(45) Date of publication and mention of the grant of the patent: **10.08.2005**
(21) Application number: 01110183.9
(22) Date of filing: 12.06.2000
(51) Int. Cl.: H04L 12/24, H04L 29/06, H04L 12/46, H04L 29/12

(54) **System and method for automatic reachability updating in virtual private networks**
System und Verfahren zur automatischen Erreichbarkeitsaktualisierung in virtuellen privaten Netzen
Système et procédé pour la mise-à-jour automatique de l'accessibilité dans des réseaux virtuels privés

(30) Priority: 10.06.1999 US 138849 P; 10.06.1999 US 138850 P; 10.06.1999 US 139033 P; 10.06.1999 US 139034 P; 10.06.1999 US 139035 P; 10.06.1999 US 139036 P; 10.06.1999 US 139038 P; 10.06.1999 US 139042 P; 10.06.1999 US 139043 P; 10.06.1999 US 139044 P; 10.06.1999 US 139047 P; 10.06.1999 US 139048 P; 10.06.1999 US 139049 P; 10.06.1999 US 139052 P; 10.06.1999 US 139053 P; 11.06.1999 US 139076 P
(43) Date of publication of application: 10.10.2001
(62) Divisional of application: 00939849.6
(73) Proprietor: Alcatel Internetworking, Inc., Calabasas, CA 91301 (US)
(72) Inventor: Iyer, Mahadevan, Fremont, California 94536 (US); Kale, Rahul P., Milpitas, CA 95035 (US); Iyer, Shanker V., Sunnyvale, CA 94087 (US); Hunt, William, Saratoga, CA 95070 (US)
(74) Representative: Rausch, Gabriele, Dr.

(56) References cited:
- EP-A- 0 909 074
- ESTRIN D ET AL: "INTER DOMAIN POLICY ROUTING: OVERVIEW OF ARCHITECTURE AND PROTOCOLS" COMPUTER COMMUNICATIONS REVIEW, ASSOCIATION FOR COMPUTING MACHINERY. NEW YORK, US, vol. 21, no. 1, 1991, pages 71-78, XP000175708 ISSN: 0146-4833
- STEENSTRUP M ET AL: "An Architecture for Inter-Domain Policy Routing" NETWORK WORKING GROUP - RFC 1478, [Online] June 1993 (1993-06), pages 1-36, XP002258142 Retrieved from the Internet: <URL:http://www.ietf.org/rfc/rfc1478.txt?n umber=1478> [retrieved on 2003-10-16]
- BLIGHT D C ET AL: "Policy-based networking architecture for QoS interworking in IP management-Scalable architecture for large-scale enterprise-public interoperation" INTEGRATED NETWORK MANAGEMENT, 1999. DISTRIBUTED MANAGEMENT FOR THE NETWORKED MILLENNIUM. PROCEEDINGS OF THE SIXTH IFIP/IEEE INTERNATIONAL SYMPOSIUM ON BOSTON, MA, USA 24-28 MAY 1999, PISCATAWAY, NJ, USA,IEEE, US, 24 May 1999 (1999-05-24), pages 813-826, XP002178128 ISBN: 0-7803-5748-5
- BRAUN T ET AL: "Virtual Private Network Architecture" CATI: CHARGING AND ACCOUNTING TECHNOLOGY FOR THE INTERNET, XX, XX, 8 January 1999 (1999-01-08), pages 1-30, XP002239239

## Description

### FIELD OF THE INVENTION

The present invention relates to computer networks, and more particularly, to devices and methods for providing efficient, integrated and scalable policy management services for remote private networks across the Internet.

### BACKGROUND OF THE INVENTION

The growth and proliferation of computers and computer networks allow businesses to efficiently communicate with their own components as well as with their business partners, customers, and suppliers. However, the flexibility and efficiencies provided by such computers and computer networks come with increasing risks, including security breaches from outside the corporation, accidental release of vital information from within it, and inappropriate use of the LAN, WAN, Internet, or extranet.

In managing the growth of computer networks as well as addressing the various security issues, network managers often turn to network policy management services such as firewall protection, Network Address Translation, spam email filtering, DNS caching, Web caching, virtual private network (VPN) organization and security, and URL blocking for keeping network users from accessing certain Web sites through use of the organization's ISP. Each policy management service, however, generally requires a separate device that needs to be configured, managed, and monitored. Furthermore, as an organization grows and spreads across multiple locations, the devices maintained also multiply, multiplying the associated expenditures and efforts to configure, manage, and monitor the devices.

The solution to this problem is not as simple as just integrating multiple network policy management functions into a single device at each location and allowing each location to share its policy information with other locations. In fact, there are many obstacles and challenges in adopting such an approach. For example, a scheme for specifying and distributing policy management information effectively across remote private networks of an entire organization generally requires a well designed object model. The synchronizing of multiple databases in the organization with updates to the policy management information may also be a complex problem. Moreover, managing the policy information efficiently for remote devices across an organization may present a challenge. Furthermore, collecting logs and statistics information from the remote private networks in a large distributed policy management system for efficient analysis and report generation is often a difficult task. Conventionally, only raw packet information is logged and saved, generally requiring time-consuming and custom-generated programs to be run on the raw data off-line to produce meaningful reports and statistics.

There are other challenges in providing a unified policy management system. For increased benefits, such unified policy management functions should be implemented as much as possible in hardware. However, implementing policy management on a chip typically requires an efficient design partitioning. Furthermore, the unified policy management system should allow for efficient configuration, management, and updating of virtual private networks extending over different remote sites.

The document "Inter domain policy routing: overview of architecture and protocols", Estrin D. et al, Computer Communication Review, January 1991, XP000175708, describes a concept of and architecture for inter-domain policy routing.

The document "An architecture for inter-domain policy routing", Steenstrup M. et al, IETF Network Working Group, RFC 1478 (June 1993), XP002258142, describes a further architecture for inter-domain policy routing.

The document "Policy-based networking architecture for QoS internetworking in IP management", Blight D.C. et al, 24 May 1999, XP002178128, discloses two approaches of policy abstraction and of hierarchy organization with precedence rules.

Accordingly, there remains a need in the art for a network management solution that overcomes these and other obstacles of the prior art.

### SUMMARY OF THE INVENTION

The present invention is directed to a unified policy management system where various policies, namely, the set of rules and instructions that determine the network's operation, may be established and enforced from a single site. According to one embodiment of the invention, the system includes a first edge device associated with a first network having a first set of resources that is configured to manage the policies for the first network according to the policy settings stored in a first database. The system also includes a second edge device associated with a second network having a second set of resources that is configured to manage the policies for the second network according to the policy settings stored in a second database. The first and second edge devices act as policy enforcers for their respective networks. The policies being enforced may include firewall policies, VPN policies, and the like.

The system further includes a central policy server in communication with the first and second edge devices. The policy server is configured to define the first and second policy settings and manage the first and second edge devices from a single location. Thus, a network administrator need not multiply his or her efforts and associated expenditures in configuring and managing the policy enforcers individually.

In alternative embodiments, the unified policy management system includes one or more of the following features:

The central policy server may include a central database for storing configuration information of the policy enforcers. The central database as well as the databases associated with the policy enforcers are Lightweight Directory Access Protocol (LDAP) databases organized according to a hierarchical object oriented structure. This structure includes resource objects and policy objects for defining the policy settings for the policy enforcers. Such a structure helps simplify policy management by allowing the various elements of the policy management system to be defined and organized in an intuitive and extensible fashion.

According to one embodiment of the invention, the resource objects include devices, users, hosts, services, and time. Devices are the policy enforcers at the edge of a particular private local network. Each device is associated with users and a host. A host is a network (e.g. a LAN subnet) in an organization. Services reflect the various services (e.g. HTTP, TELNET, FTP) provided by the policy server. Time is another dimension in controlling access to the network resources.

The central database stores the configuration information, including policy settings, for all the policy enforcers. When a change is made to the configuration information, the policy server creates a log of such changes and stores it in the central database for later transferring to the policy enforcers. When the policy enforcers receive the log of changes, they update their respective databases accordingly and indicate to the policy server whether the updates have been successful. If they have been successful, the log of changes corresponding to these policy enforcers are deleted from the central database.

The central policy server may further include a set of user application modules for allowing a user, such as the network administrator, to define the policy settings for the policy enforcers and further manage the policy enforcers from the single location. Preferably, the policy settings are associated with a plurality of resource objects including devices, users, hosts, services, and time.

In one aspect of the invention, the set of application modules includes a centralized management sub-module for allowing installation and registration of the policy enforcers with the central policy server.

In another aspect of the invention, the set of application modules includes a policy management sub-module for managing and viewing the resource objects from the single location.

In yet a further aspect of the invention, the policy server includes a set of user application modules for allowing a user to monitor the health and status of the policy enforcers. Each policy enforcer collects and transmits the health and status information to the policy server in a predefined common log format. The policy server may then create various reports based on this information. It should be appreciated, therefore, that the present invention allows on-the-fly monitoring of the resources in the organization, yielding further advantages of the invention over the prior art, which generally collected only raw data and required the tedious generation of reports.

The functionalities of the policy enforcers in enforcing the policies for their respective networks may also be partitioned for effective hardware implementation. According to one embodiment of the invention, each edge device preferably includes a plurality of modules including a classification engine, a policy engine, and a packet forwarding engine. The classification engine determines a protocol associated with an incoming packet. The policy engine makes a forwarding decision for the packet based on policy settings associated with the packet. The packet forwarding module then forwards the packet based on the policy settings.

In alternative embodiments, the module may further include a security engine for authenticating a user transmitting the packet and/or a statistics module for collecting statistics of packets flowing through the policy enforcer.

Each of the networks in the system may also constitute private networks and each policy enforcer associated with the private network is configured to create a table with information of member networks reachable through the policy enforcer. The table is then shared with the other member policy enforcers in the VPN. This allows the creation of VPNs whose member lists are dynamically compiled.

In one particular aspect of the invention, the communication between the first and second private networks is managed according to a security policy associated with the member networks. The security policy is preferably defined for a security policy group, referred to as a VPN cloud, providing a hierarchical organization of the group. The VPN cloud includes member networks (hosts), users allowed to access the member networks, and a rule controlling access to the member networks. The hierarchical organization provided by the VPN clouds thus allows the network administrator to create fully meshed VPNs where every site within a VPN cloud has full connectivity with every other site. The network administrator need no longer manually configure each possible connection in the VPN, but only need to create a VPN cloud and specify the sites, users, and rules to be associated with the VPN. Each connection is then configured based on the configuration specified for the VPN cloud. The hierarchical organization thus facilitates the setup of a VPN with a large number of sites.

In another aspect of the invention, the rule in the VPN is a firewall rule providing access control of the traffic among the member networks. Such firewall rules allow the administrator to have fine grained access control over the traffic that flows through the VPN, all within the realm of the encrypted access provided by such VPN.

In a further aspect of the invention, a remote user accesses the member networks from a remote location using a remote user terminal. The terminal is configured with software for downloading the table with the dynamic membership information from the edge device to which it is connected. Updates to the membership information are further automatically transmitted to the remote user terminal without requiring reconfiguration of the terminal.

The policy server and policy enforcers, as well as other network devices may also be configured for high availability by maintaining a second class unit (backup unit) in addition to a first class unit (primary unit) for preventing a single point of failure. In one aspect of the invention, the backup unit is initially in an inactive state and later transitions to the active state upon detection of a failure is the primary unit.

In another aspect of the invention, each high-availability device discovers its status as a primary unit, a backup unit, or a stand-alone unit (third class unit) during initialization.

In a further aspect of the invention, the configuration information stored in the databases of the primary and backup units are synchronized by transitioning the first class unit to an active state, receiving and storing the first database configuration changes on the first class unit, transferring the configuration changes to the second class unit, and storing the configuration changes on the second class unit. When the primary unit transitions to an inactive state, the backup unit stores the second database configuration changes on the second class unit and transfers those changes to the primary unit after it re-transitions to the active state.

In still another aspect of the invention, updates to the primary and backup units, such as software updates, are also synchronized transmitting the update information to the primary unit, updating the primary unit, transmitting the update from the primary unit to the backup unit, and updating the backup unit. Thus, the network administrator need not duplicate his or her efforts to update the backup units.

### BRIEF DESCRIPTION OF THE DRAWINGS

These and other features, aspects and advantages of the present invention will be more fully understood when considered with respect to the following detailed description, appended claims and accompanying drawings wherein:
FIG. 1 is a schematic block diagram of an exemplary unified policy management system;
FIG. 2 illustrates the hierarchical object-oriented structure of policies stored for an organization in accordance with the principles of the invention;
FIG. 3 is a schematic block diagram of a policy server in the policy management system of FIG. 1;
FIG. 4 is a schematic diagram of a central management sub-module in the policy server of FIG. 3;
FIG. 5 is an exemplary flow diagram of a device registration process carried out by the central management sub-module of FIG. 4;
FIG. 6 is a screen illustration of an exemplary graphical user interface for registering a device;
FIG. 7 is a screen illustration of an exemplary global monitor user interface presenting device health and status information;
FIG. 8 is a screen illustration of an exemplary graphical user interface provided by a policy management sub-module in the policy server of FIG. 3;
FIG. 9 is a screen illustration of an exemplary graphical user interface for managing system devices;
FIG. 10 is a screen illustration of an exemplary graphical user interface for managing system hosts;
FIG. 11 is a screen illustration of an exemplary graphical user interface for managing system services;
FIG. 12 is a screen illustration of an exemplary graphical user interface for managing time groups;
FIG. 13 is a screen illustration of an exemplary graphical user interface displaying a plurality of VPN clouds;
FIG. 14 is a screen illustration of an exemplary graphical user interface for adding a new firewall policy;
FIG. 15 is a schematic functional block diagram of policy enforcers updating their respective VPN membership information;
FIG. 16 is a block diagram of components in a self-extracting executable for downloading by a remote VPN client;
FIG. 17 is a functional block diagram for downloading the self-extracting executable of FIG. 16;
FIG. 18 is a schematic block diagram of a policy enforcer in the policy management system of FIG. 1;
FIG. 19 is a more detailed schematic block diagram of a policy engine in the policy enforcer of FIG. 18;
FIG. 20 is a more detailed schematic block diagram of a protocol classification engine of the policy enforcer of FIG. 18;
FIG. 21 is a more detailed schematic block diagram of an Internet protocol security engine in the policy enforcer of FIG. 18;
FIG. 22 is a schematic layout diagram of a common log format according to one embodiment of the invention;
FIG. 23 is a block diagram of an LDAP tree structure according to one embodiment of the invention;
FIG. 24 is a more detailed block diagram of a branch of the LDAP tree of FIG. 23;
FIG. 25 is a flow diagram for logging and propagating LDAP changes to policy enforcers;
FIG. 26 is a schematic block diagram of a high availability system including a primary unit and a backup unit;
FIG. 27 is a flow diagram of an exemplary status discovery process conducted by a high availability unit;
FIG. 28 is a flow diagram of a process for maintaining configuration information synchronized in the primary and backup units of FIG. 26;
FIG. 29 is an exemplary flow diagram of updating the primary and backup units of FIG. 26 when they are both functional; and
FIG. 30 is an exemplary flow diagram of updating the primary and backup units FIG. 26 when the primary is not functional.

### DETAILED DESCRIPTION OF THE INVENTION

### I. UNIFIED POLICY MANAGEMENT SYSTEM ARCHITECTURE

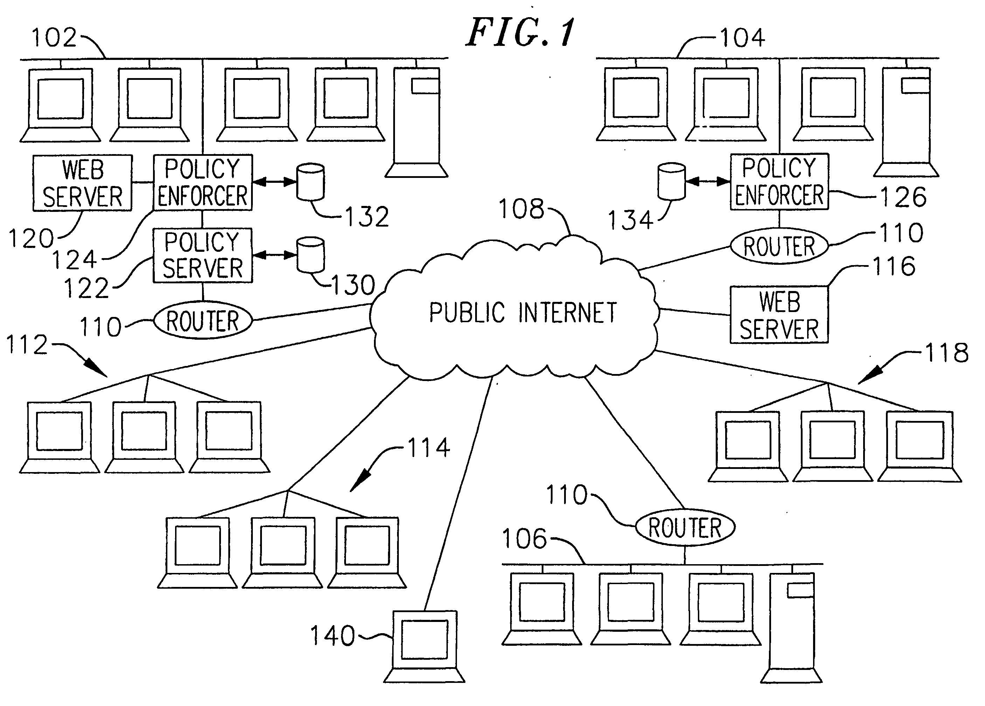

FIG. 1 is a schematic block diagram of an exemplary unified policy management system according to one embodiment of the invention. As illustrated in FIG. 1, private local networks 102, 104, and 106 are all coupled to a public network such as the Internet 108 via respective routers (generally identified at 110) and Internet Service Providers (ISPs) (not shown). Also coupled to the public Internet 108 via the ISPs are web surfers 112, dial-up network users 114, servers providing unauthorized web sites 116, email spammers 118 sending out unsolicited junk email, and remote VPN clients 140 seeking access to the private local networks 102.

According to one example, local network 102 connects users and resources, such as workstations, servers, printers, and the like, at a first location of the organization, such as the organization's headquarters, and local network 104 connects users and resources at a second location of the organization, such as a branch office. Furthermore, local network 106 connects users and resources of a customer of the organization requiring special access to the organization's users and resources. Authorized dial-up network users 114 of the organization are respectively situated at remote locations from the first and second local networks, and also require special access to the organization's users and resources. Furthermore, web surfers 112 communicate with the organization's web server 120 over the public Internet 108 and access the organization's web site.

Local network 102 includes a policy server 122 for defining and managing network services and policies for the organization. The network policies are a set of rules and instructions that determine the network=s operation, such as firewall, VPN, bandwidth, and administration policies. The firewall policies decide the network traffic that is to be allowed to flow from the public Internet 108 into the local networks 102, 104, and the traffic that is to be blocked. The bandwidth policies determine the kind of bandwidth that is to be allocated to the traffic flowing through the local networks. The VPN policies determine the rules for implementing multiple site connectivity across the local networks. The administration policies decide the users that have access to administrative functions, the type of administrative functions allocated to these users, and the policy enforcers 124, 126 on which these users may exercise such administrative functions. The firewall, VPN, bandwidth, and administration policies for the entire organization are preferably stored in a policy server database 130 maintained by the policy server 122.

Each local network 102, 104 also includes an edge device, referred to as a policy enforcer 124, 126, for controlling access to the network. Each policy enforcer 124, 126 manages the network policies and services for the users and resources of their respective local networks 102, 104, as permitted by the policy server 122. Respective portions of the policy server database 130 are copied to the policy enforcer databases 132, 134 for allowing the policy enforcers to manage the network policies and services for the local networks 102, 104.

According to one embodiment of the invention, the policy server 122 and policy enforcers 124, 126 may be implemented in a similar fashion as the FORT KNOX series of policy routers made by Alcatel Internetworking, Inc., of Milpitas, California.

### II. OBJECT MODEL FOR NETWORK POLICY MANAGEMENT

According to one embodiment of the invention, the policy server database 130 and policy enforcer databases 132, 134 are LDAP databases adhering to a unified hierarchical object oriented structure. The LDAP directory service model is based on entries where each entry is a collection of attributes referenced by a distinguished name (DN). Each of the attributes includes a type and one or more values. The type is typically a mnemonic string, such as "o" for organization, "c" for country, or "mail" for email address. The values depend on the type of attribute. For example, a "mail" attribute may contain the value "babs@umich.edu." A "jpegPhoto" attribute may contain a photograph in binary JPEG/JFIF format. Additional details of the LDAP directory service model are defined in RFC 1777 "The Lightweight Directory Access Protocol" (W. Yeong, T. Howes, and Kille, Network Working Group, March 1995) and "LDAP Programming: Directory-enabled Applications with Lightweight Directory Access Protocol" (T. Howes, and M. Smith, Macmillan Technical Publishing, 1997).

The entries in the LDAP database are preferably arranged in a hierarchical tree-like structure reflecting political, geographic, and/or organizational boundaries. Entries representing countries appear at the top of the tree. Below them are entries representing states or national organizations. Below the states or national organizations may be entries representing people, organization units, printers, documents, and the like.

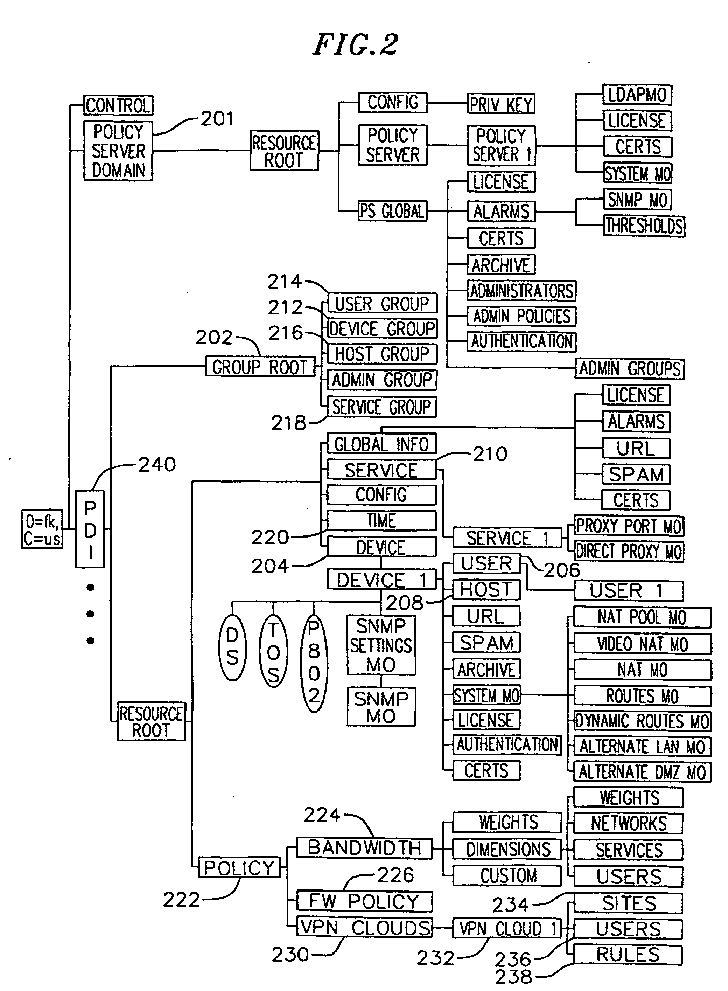

FIG. 2 is a schematic layout diagram of a unified hierarchical object oriented structure adhered by the policy server database 130 according to one embodiment of the invention. The policy enforcer databases 132, 134 adhere to a similar structure except for a few differences. For example, the policy enforcer databases preferably do not contain a policy server domain object 201 and related policy server objects, nor a policy domain object 240.

As illustrated in FIG. 2, each object in the structure is preferably stored as an LDAP entry. At the top of the hierarchy is the policy server domain object 201 including various policy server resources and a plurality of policy domains objects (generally referenced at 204). Each policy domain object 240 is a grouping of policy enforcers that share common policies. Each policy domain object 240 includes a resource root object 200 and a group root object 202. All policy management functions are preferably implemented in terms of the resource objects which include devices 204, users 206, hosts 208, services 210, and time 220. Thus, a firewall policy may be defined by simply assigning the particular devices, users, hosts, services, and time applicable to the policy. The devices, users, hosts, and services are preferably organized in groups 212, 214, 216, and 218, respectively, having a group name, description, and member information for a more intuitive way of addressing and organizing the resources.

Users 206 are preferably associated with a user domain providing a secure and efficient means of authenticating the user. Each user domain has a single policy enforcer who is authorized to authenticate the user. Thus, user domains ensure that the authenticating agent is generally located in the same local network as the user. This helps eliminate the cost of network dependency or network latency during the user authentication process. It should be noted, however, that users may also constitute authorized dial-up users 114 and users from the customer network 106. These users contact a remote authenticating agent which proxies the authentication back to the appropriate policy enforcer.

Hosts 208 are the various networks present in an organization. For instance, a particular LAN subnet may be specified as a host in the system. Hosts 208 are preferably organized based on their physical locations within the organization. A host=s physical location is identified by the device (policy enforcer) 204 associated with the host.

Services 210 reflect the various services provided by the policy server 122. Such services include, for example, multimedia streaming/conferencing, information retrieval, security and authentication, database applications, mail applications, routing applications, standard communication protocols, and the like. Attributes associated with each service preferably include a service name, description, type (e.g. HTTP, HTTPS, FTP, TELNET, SMTP, Real Networks, and the like), and group.

Devices 204 are the policy enforcers 124, 126 at the edge of a particular local network. Each device/policy enforcer preferably includes users 206 and a host/network 208 that is managed by the policy enforcer.

Time 220 is another dimension in controlling access to the network resources. Various time objects covering a range of times may be created and used in creating the firewall policies.

Similar to resources, network policies are also preferably defined in terms of objects for a more efficient and intuitive definition of the policies. Policies are defined by the administrators and implemented by the policy enforcers 124, 126 on the network traffic flowing between the public Internet 108 and the local networks 102 and 104.

According to one embodiment of the invention, a policy object 222 includes a bandwidth policy 224, firewall policy 226, administration policy 228, and VPN policy 230. The VPN policy 230 defines a security policy for the member networks and includes one or more VPN clouds 232. Each VPN cloud 232 is an individual VPN or a group of VPNs defining a security policy group which includes a list of sites 234 and users 236 who can communicate with each other. A site is preferably a set of hosts/networks physically located behind one of the policy enforcers 124, 126. In other words, a site is a definition of a network which includes the policy enforcer that is associated with it. The policy enforcers for the sites act as VPN tunnel endpoints once the hosts under the sites start communicating. These communications are governed by a set of rules 238 configured for each VPN cloud. The rules 238 may govern, among other things, VPN access permissions and security features such as the level of encryption and authentication used for the connectivity at the network layer.

The object oriented structure of FIG. 2 thus allows the network administrators to define policies in an intuitive and extensible fashion. Such policies may be defined by simply associating resources to the policies. This allows for a policy-centric management model where the administrator is given the impression that a single logical server provides the firewall, bandwidth management, and VPN services across the enterprise. The fact that the policy is enforced on individual policy enforcers in different locations is transparent to the administrator.

### III. POLICY-BASED NETWORK ARCHITECTURE

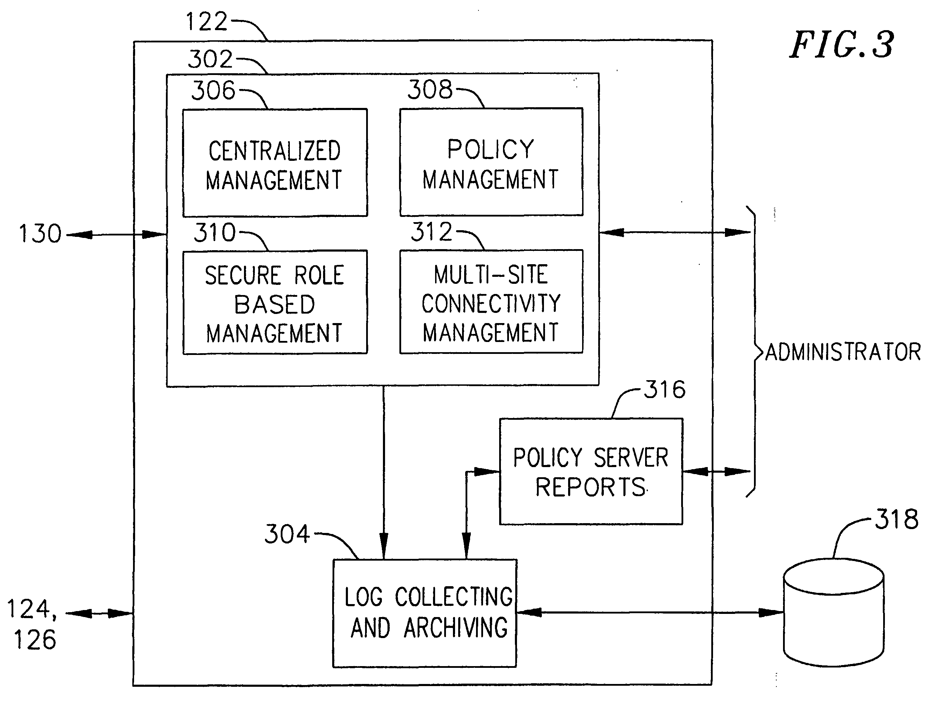

FIG. 3 is a more detailed schematic block diagram of the policy server 122 according to one embodiment of the invention. The policy server 122 preferably includes a management module 302 that allows centralized control over the policy enforcers 124, 126 from a single console. The policy server 122 further includes a log collecting and archiving module 304 and a policy server reports module 316. The log collecting and archiving module 304 collects information about the status and usage of resources from the policy enforcers 124, 126 as well as from the management module 302, and stores them in an archive database 318. The policy server reports module 316 uses the collected logs and archives to generate reports in an organized report format.

Referring again to the management module 302, the management module 302 preferably includes four sub-modules aiding in the centralized control, namely, a centralized management sub-module 306, policy management sub-module 308, secure role-based management sub-module 310, and multiple site connectivity management sub-module 312.

The centralized management sub-module 306 enables a network administrator to install and manage individual policy enforcers from a central location. The network administrator preferably uses a web-based graphical user interface to define the policy enforcer's network configuration and monitor various aspects of the device, such as device health, device alarms, VPN connection status, and the like.

The policy management sub-module 308 provides the network administrator with the ability to create policies that span multiple functional aspects of the policy enforcer (e.g. firewall, bandwidth management, and virtual private networks), multiple resources (e.g. users, hosts, services and time), and multiple policy enforcers.

The secure role-based management sub-module 310 provides role-based management to enable administrators to delegate administrative responsibilities to other administrators. This sub-module preferably provides for maximum security when it comes to accessing the management functions.

The multiple site connectivity management sub-module 312 allows the network administrator to set-up secure communication channels between two or more remote sites. In doing so, this sub-module leverages the centralized management sub-module 306, policy management sub-module 308, dynamic routing capabilities of the policy enforcers 124, 126, and the management infrastructure to provide virtual private networks across the enterprise with fine grained access control.

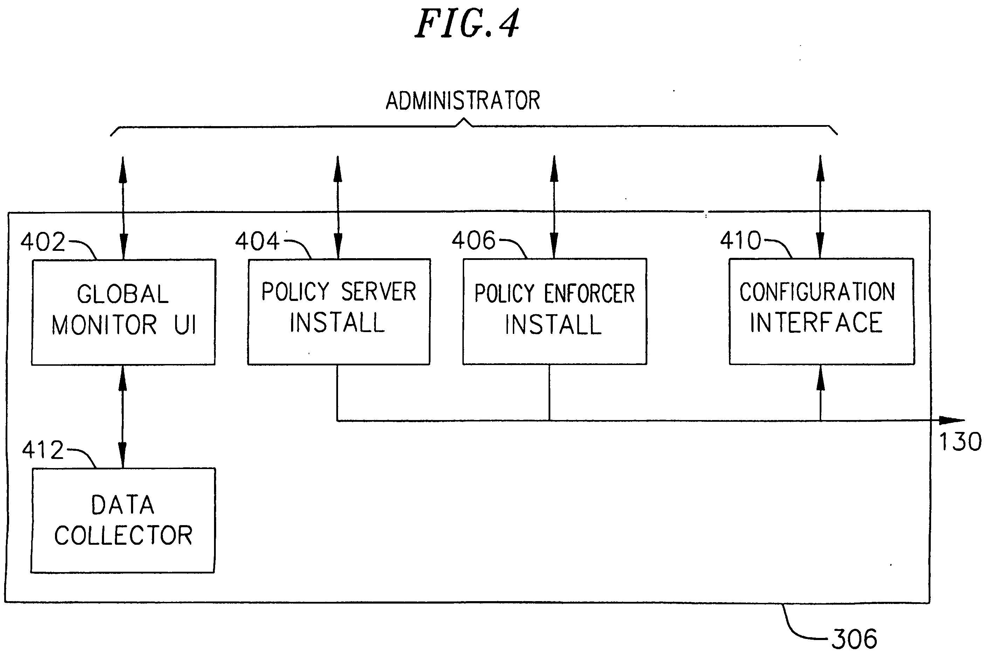

FIG. 4 is a more detailed schematic diagram of the central policy management sub-module 306 according to one embodiment of the invention. The sub-module includes a policy server installation wizard 404 providing an interactive user interface to aid the installation of the policy server 122. In this regard, the network administrator has access to a personal computer connected to a LAN port of the policy server 122 via a cross over cable, hub, or the like. The network administrator connects to the policy server 122 by preferably typing-in a URL of the policy server 122 into a standard Internet browser such as Microsoft Internet Explorer. The URL is preferably of the form of "http://<ipaddress>:88/index.html" where <ipaddress> is the IP address that is to be assigned to the policy server. The IP address is automatically assigned to the policy server when the browser attempts to contact the address. When the administrator=s personal computer sends an address resolution protocol request for the IP address, the policy server detects that a packet directed to port 88 is not claimed, and assumes the IP address.

Once connected, the policy server installation wizard 404 invokes the interactive user interface to assist the administrator in setting up the policy server 122. Among other things, the policy server installation wizard 404 prompts the administrator to specify a server name, server IP address, and router IP address. Furthermore, the policy server installation wizard 404 prompts the administrator to select one of various default policies for creating default firewall, VPN, bandwidth, and administrator policies. These policies are then replicated on each new policy enforcer registering with the policy server 122.

The centralized management sub-module 306 further includes a policy enforcer installation wizard 406 providing an interactive user interface to aid the installation of the policy enforcers 124, 126. As with the installation of the policy server 122, the access to the wizard 406 is preferably web-based using the network administrator's personal computer.

Once connected, the policy enforcer installation wizard 406 invokes the interactive user interface to assist the network administrator in setting up a particular policy enforcer 124, 126. Among other things, the policy enforcer installation wizard 464 prompts the administrator to specify the policy server IP address, policy enforcer IP address, and router IP address. The policy enforcer then registers with the policy server 122 by invoking a URL on the policy server with basic bootstrap information of its own. The registration of the policy enforcer allows the initialization of the policy enforcer=s database 132, 134 with the configuration information, as well as the monitoring of the policy enforcer's status and health by the policy server 122.

Prior to registering the policy enforcer with the policy server 122, the network administrator preferably pre-registers the policy enforcer on the policy server. Such pre-registering allows the creation of a placeholder node on the policy server for the policy enforcer data for when the policy enforcer does in fact register. In this regard, the centralized management sub-module 306 includes a configuration interface 410 allowing the pre-registration of a new policy enforcer.

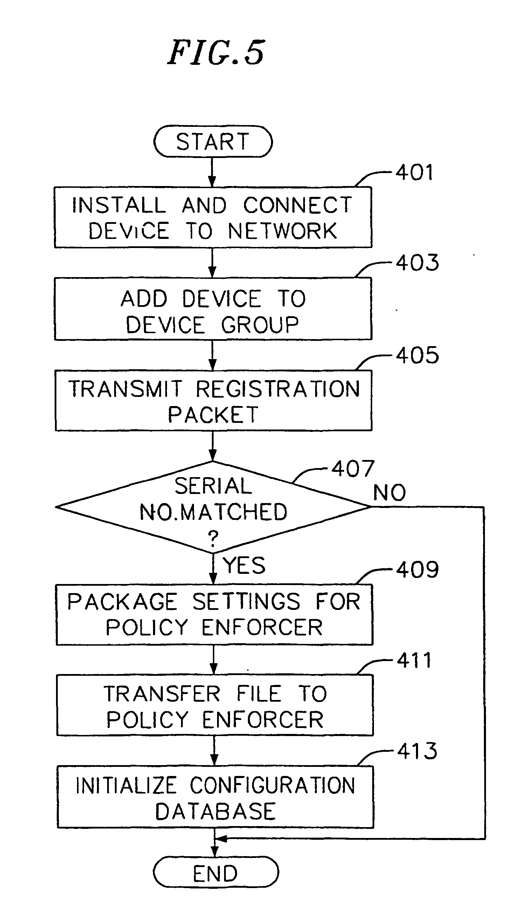

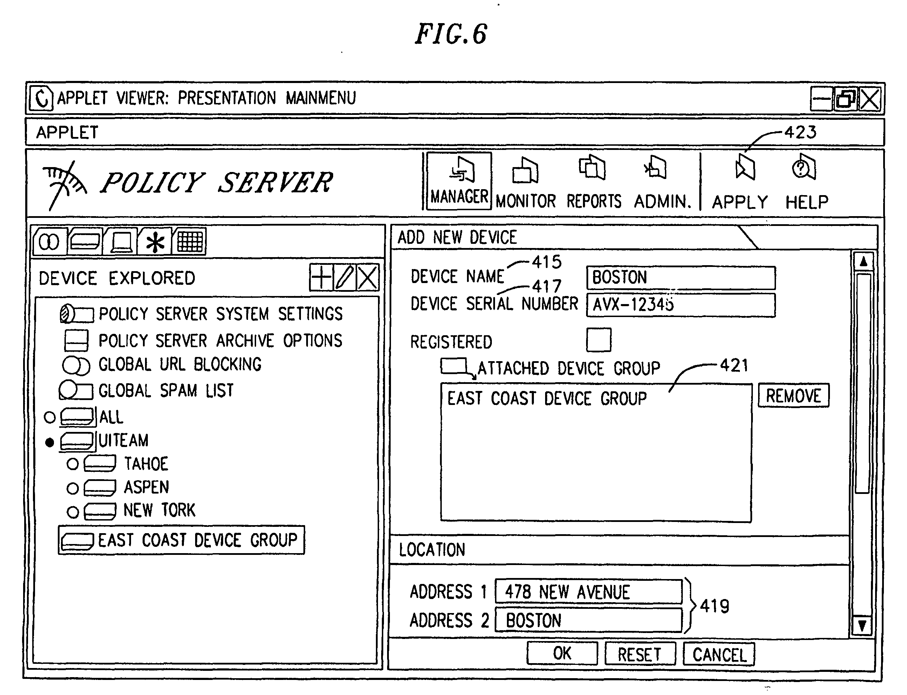

FIG. 5 is an exemplary flow diagram of a policy enforcer pre-registration and registration process according to one embodiment of the invention. In step 401, the policy enforcer is connected to the network and installed at its actual physical location using the above-described policy enforcer installation wizard 406. The network administrator, possessing the new device's serial number, pre-registers the policy enforcer by adding the new policy enforcer to a device group in step 403. In this regard, the configuration interface 410 invokes an interactive graphical interface, such as the one illustrated in FIG. 6, allowing the network administrator to enter a device name 415, serial number 417, and location information 419, and further allowing the administrator to select a device group 421 to which the new policy enforcer is to belong. Actuation of an apply button 423 causes the new policy enforcer, in step 405, to contact the policy server 122 by preferably invoking a URL on the policy server. Once the policy server has been contacted, the new policy enforcer transmits its registration packet to the policy server. The registration packet includes at least a serial number of the new policy enforcer, as well as the IP addresses of the LAN, WAN, and DMS on the policy enforcer. In step 407, the centralized management sub-module 306 compares the serial number of the new policy enforcer with the list of policy enforcers pre-registered with the policy server 122. If a match is found, the policy server 122 proceeds with the registration process by packaging, in step 409, the settings selected for the policy enforcer during its installation process, preferably into an LDAP Data Interchange Format (ldif) file. In step 411, the file is transmitted to the policy enforcer, preferably over an HTTPS channel, by invoking a common gateway interface (CGI) on the policy enforcer. The policy enforcer then uses the file to initialize its configuration database, such as database 132, 134, in step 413.

Referring again to FIG. 4, the centralized management sub-module 306 also includes a global monitor user interface 402 and a data collector program 412, respectively displaying and collecting the health and status of all the policy enforcers managed by the policy server 122. The data collector program 412 receives health and status information from each of the up-and-running policy enforcers it manages, and passes the relevant information to the global monitor user interface. A health agent running as a daemon in each of the policy enforcers being monitored periodically collects data from the device and analyzes its health status. The collected data is then transferred to the policy server 122 when requested by the data collector program 412.

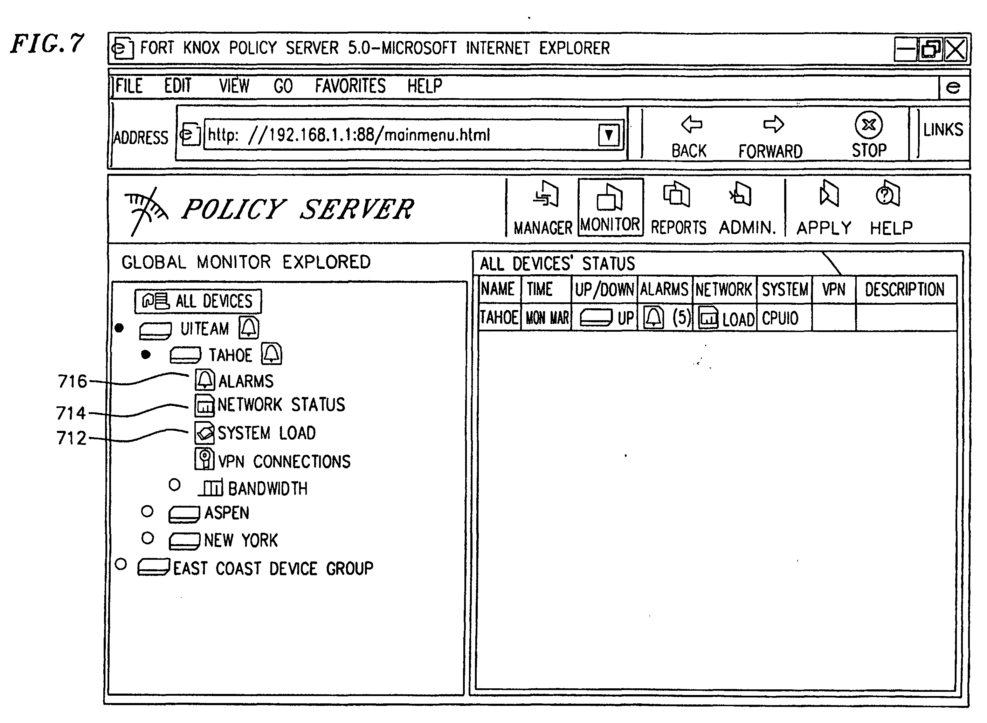

FIG. 7 is a screen illustration of an exemplary global monitor user interface 402 presenting various types of health and status information. Such information may relate to the health of the device, such as system load 712 and network usage information 714. The information may also relate to current alarms 716 on the device including alarm name, type, description, and the like. The information may further relate to current VPN connections 718 including connection type, source/destination, duration, and VPN traffic volume.

Referring again to FIG. 3, the policy management sub-module 308 allows for policy management of the policy enforcers 124, 126. As discussed above, all policy management functions are implemented in terms of resource objects stored in the policy databases 130, 132, 134 including users, devices, hosts, services, and time. Preferably, all resources are associated with default policy settings selected by the administrator during the installation process. The network administrator views, adds, and modifies the policies centrally via a graphical user interface provided by the policy management sub-module 308. This allows for a policy-centric management model where the administrator is given the impression that a single logical server provides the firewall, bandwidth management, and VPN services across the enterprise. The fact that the policy is enforced on individual policy enforcers in different locations is transparent to the administrator.

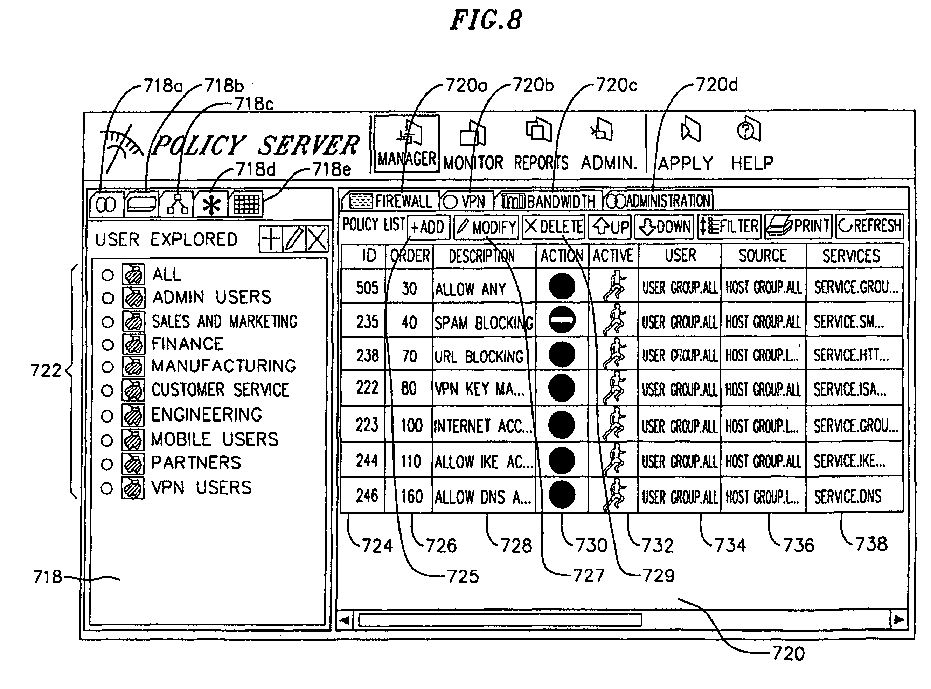

FIG. 8 is a screen illustration of an exemplary graphical user interface provided by the policy management sub-module 308. The interface includes a resource palette 718 including a list of resource tabs including a users tab 718a, devices tab 718b, hosts tab 718c, services tab 718d, and time tab 718e. The resource palette allows the administrator to add and modify resource definitions from a single console.

Selection of the users tab 718a causes a display of the user groups 722 defined for the system. New users may be added to the group by selecting a particular group and defining various attributes of the user such as a login name, full name, policy enforcer to which the user belongs, authentication scheme, password, and the like.

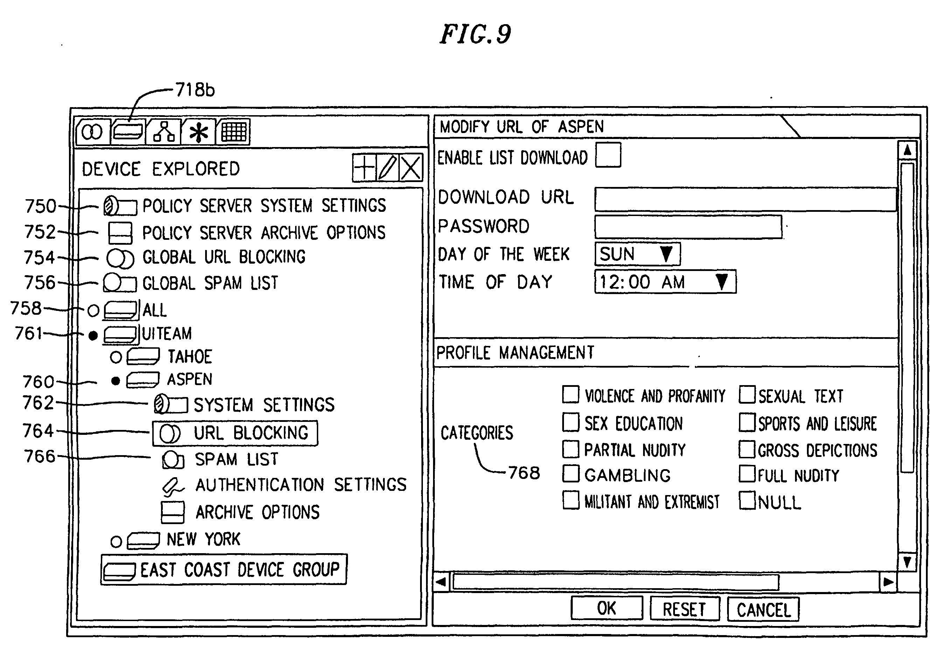

Selection of the devices tab 718b causes a display of various device management icons for managing the policy server 122 and the policy enforcers 124, 126 as is illustrated in FIG. 9. A policy server systems settings icon 750 allows the network administrator to view and modify system settings like LAN, WAN/DMS IP addresses of the policy server 122. A policy server archive options icon 752 allows specification of reporting and other database archive options at the policy server 122. A global URL blocking icon 754 allows the administrator to specify a list of unauthorized web sites 116 to be blocked by all the policy enforcers 124, 126 of the system. Similarly, a global spam list icon 756 allows the administrator to specify a list of email addresses of spammers 118 to be blocked by all the policy enforcers.

The administrator may view information on all the policy enforcers 124, 126 by selecting icon 758. Information on a specific policy enforcer may be viewed by selecting a specific policy enforcer 760 under a particular device group 761. Such information includes system settings information 762, URL blocking information 764, spam list information 766, and the like, that is specific to the selected policy enforcer. For instance, selection of the policy enforcer's URL blocking information 764 icon causes a display of various categories 768 of URLs that the network administrator may select to block for the selected policy enforcer.

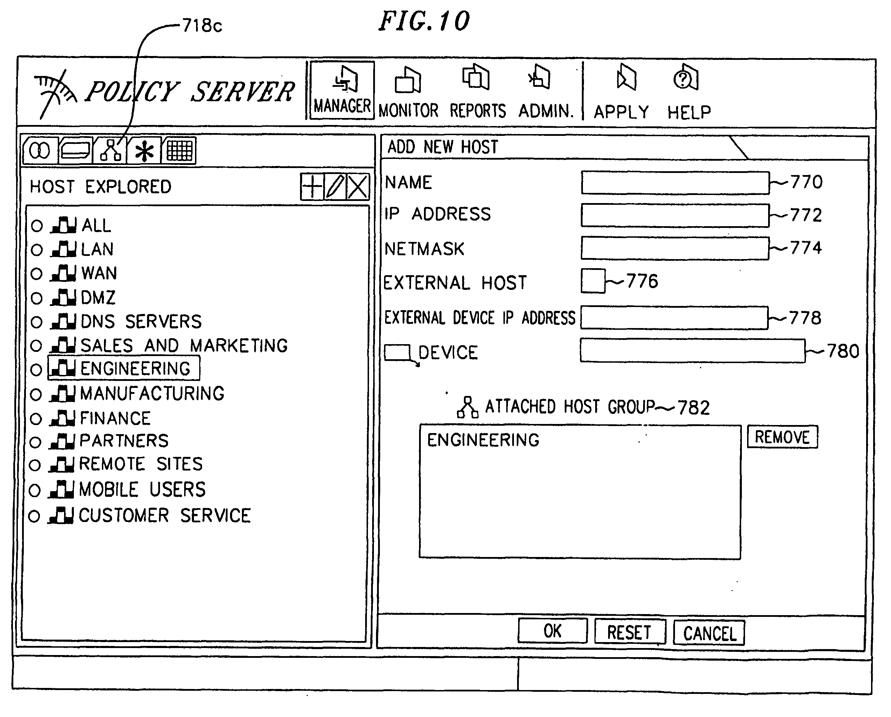

Selection of the hosts tab 718c causes a display of various hosts (networks) of the system as is illustrated in FIG. 10. A host is organized based on its physical location and is further associated with a particular policy enforcer 124, 126. Hosts are associated with various attributes including a unique name 770, an IP address of the network 772, and a subnet mask 774. In addition, the administrator may specify whether the host is an external host 776 belonging to a network that is not administered by the policy server 122. If the host is an external host, the administrator specifies an IP address 778 of the external device to which the host belongs. A device field 780 allows the administrator to enter the policy enforcer's name to which the host belongs. Each host is further associated with a particular group 782 assigned by the administrator.

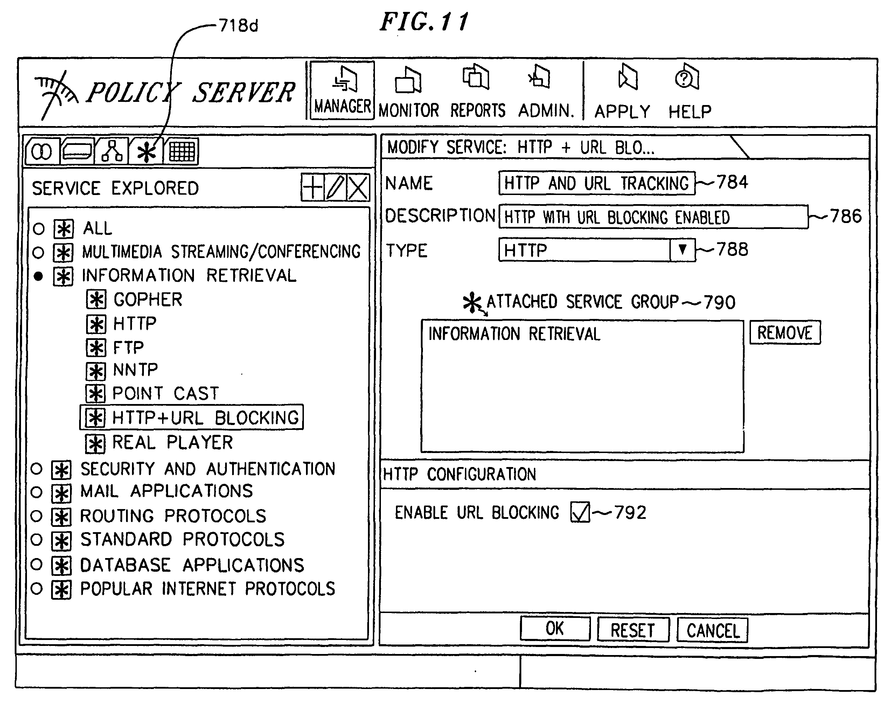

Selection of the services tab 718d causes a display of various service groups supported by the policy server 122 as is illustrated in FIG. 11. Such service groups include, for example, multimedia streaming/conferencing, information retrieval, security and authentication, mail applications, routing applications, database applications, standard communication protocols and the like. Users may also add new service groups as desired.

Each service is associated with a name 784, description 786, and service type 788 (e.g. HTTP, HTTPS, FTP, TELNET, SMTP, Real Networks, and the like). Furthermore, each service is associated with a service group 790. Based on the type of service, additional information may also be specified for the service. For instance, for an HTTP service, the administrator may specify whether URL blocking 792 is to be enabled.

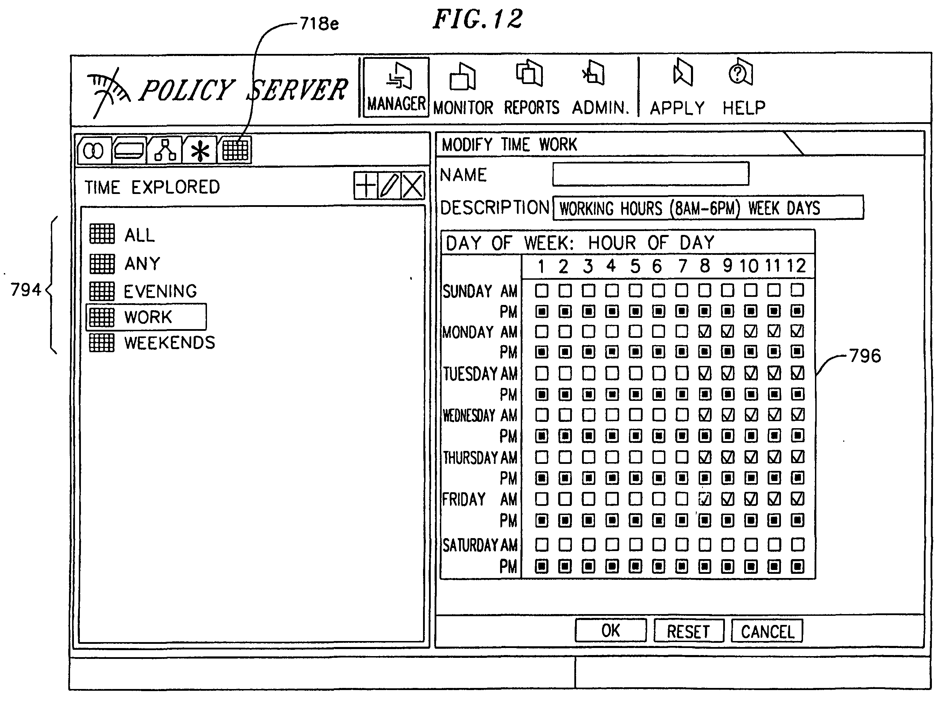

Selection of the time tab 718e causes a display of various time group icons 794 covering a range of times to be used in the firewall policies as is illustrated in FIG. 12. For instance, selection of a work time group icon allows the network administrator to set the days and times which are to be set as working days and hours.

Referring again to FIG. 8, the interface also includes a policy canvas 720 including a list of policies available to the system. A policy definition is preferably an association of a set of resources that may be dragged from the resource palette 718 and dropped onto the policy canvas 720.

Selection of a firewall tab 720a causes a display of all the firewall policies defined for a particular policy domain including one or more policy enforcers. The network administrator decides the domain to which a policy enforcer is to belong during pre-registration of the policy enforcer. The interface allows the network administrator to view, add, and modify the various policies from the policy server 122 and effectuate the changes on the policy enforcers 124, 126 without the need to make such changes individually in each policy enforcer.

According to one embodiment of the invention, each firewall policy includes a policy identifier (ID) attribute 724 for identifying a particular policy rule in the list of policies. An order number attribute 726 for the policy rule indicates the sequence in which the policy is to be applied. In this regard, the policy enforcer 124, 126 for the local network takes one rule at a time, in sequence, compares it against the network traffic, and preferably applies the first rule that matches the network traffic.

Each firewall policy also includes a description attribute 728 for describing the firewall policy to be applied. For instance, the description may indicate that the policy allows spam blocking, URL blocking, VPN key management, and the like. An action flag attribute 730 indicates whether traffic is to be allowed or denied for the indicated policy. An active flag attribute 732 indicates whether the policy has been activated or de-activated. Thus, the network administrator may create a policy and activate it at a later time. A policy that has been de-activated preferably has no effect on the network traffic.

Each firewall policy further includes a user attribute 734, source attribute 736, service attribute 738, destination attribute (not shown), and time attribute (not shown). Each of these attributes is preferably represented by a group name or a resource name. The name acts as a pointer to an entry in the group root object 202 or resource root object of the LDAP database 130, 132, or 134.

Preferably, the user attribute 734 indicates the user groups and users that are eligible for the policy. The source attribute 736 indicates a point of origination of the network traffic associated with the user. The services attribute 738 indicates the services to the allowed or denied by the policy. The destination attribute indicates a specific LAN, WAN, DMS segment or specific hosts where the specified services are to be allowed or denied. For example, to configure SMTP pop services on a mail server, the host may be the IP address where the mail server is running, and the services specified is SMTP. The time attribute indicates a time slot in which the policy is to be effective,

In addition to the above, each firewall policy also includes an authentication attribute (not shown) indicating an authentication scheme for the policy (e.g. none, LDAP, SecurID, RADIUS, WinNT, or all).

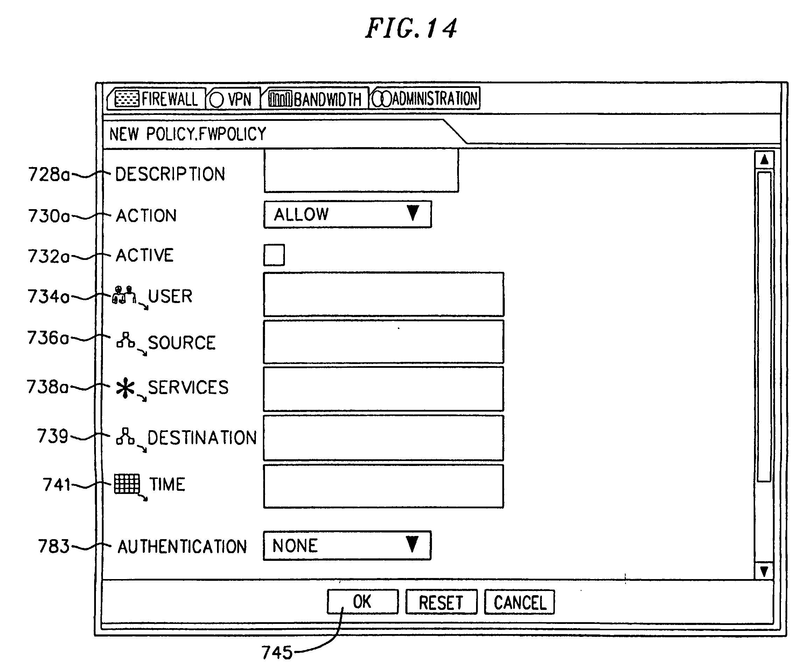

FIG. 14 is a screen illustration of an exemplary graphical user interface for adding a new firewall policy to the policy domain upon actuation of an add button 725. Existing firewall policies may also be modified or deleted by actuation of a modify button 727 and a delete button 729, respectively.

As illustrated in FIG. 14, a new firewall policy may be defined by simply adding a description of the policy in a description area 728a, selecting an action to be applied to the matching network traffic in an action box 730a, and indicating in an active area 732a whether the policy is to be active or inactive. Furthermore, the network administrator specifies the user, source, services, destination, and time resources in a user area 734a, source area 736a, services area 738a, destination area 739a, and time area 741, respectively. The network administrator further selects an authentication scheme for the policy in an authentication area 743. Upon actuation of an OK button 745, appropriate entries of the policy server database's LDAP tree are suitably changed to reflect the addition of the new policy. The change is also transmitted to the respective policy enforcers as is described in further detail below.

Referring again to FIG. 8, selection of the bandwidth tab 720c allows the display, addition, and modification of various bandwidth policies determining the kind of bandwidth to be allocated to a traffic flowing through a particular policy enforcer. Different bandwidths may be specified for different users, hosts, and services.

Selection of the administration tab 720d allows the display, addition, and modification of various administrative policies allowing a head network administrator to delegate administrative responsibilities to other administrators. In this regard, the head network administrator specifies administration policies that determine which users have access to what functions, and for what devices. Preferably the administration policies include similar attributes as the firewall rules except for the specification of a role attribute. Extra administrative privileges may be afforded to certain users depending on their role.

### IV. VIRTUAL PRIVATE NETWORK HAVING AUTOMATIC REACHABILITY UPDATING

Referring again to FIG. 3, the multi-site connectivity management module 312 allows the creation of dynamically routed VPNs where VPN membership lists are automatically created without statically configuring the membership information by the network administrator. Thus, once the administrator configures a VPN from one policy enforcer's LAN to another, routing protocols such as RIPv1 or RIPv2 running on the LAN interfaces learn about the networks reachable through their respective interfaces. These networks then become the VPN's members, and the policy enforcers 124, 126 on either side of the VPN create membership tables using the learned routes. The membership information is preferably exchanged between the policy enforcers 124, 126 through the LDAP databases 132, 134. Thus, the combined use of routing protocols and LDAP allows the creation of VPNs whose member lists are dynamically compiled.

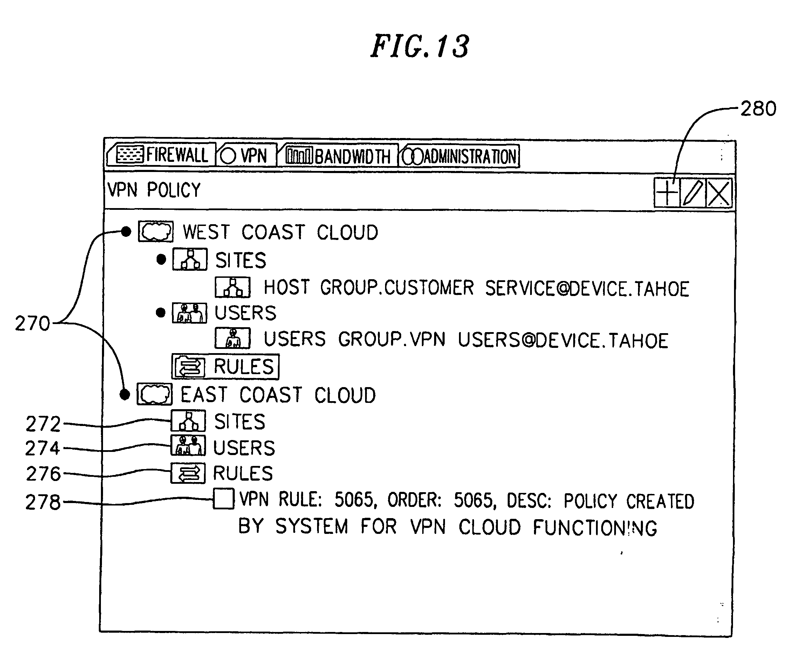

Referring again to FIG. 8, the network administrator configures VPN policies for multiple site connectivity using the resource palette 718 and policy canvas 720. Selection of the VPN tab 720b in the policy canvas 720 causes the display of a collection of VPN clouds 270 already configured for the system as is illustrated in FIG. 13. As described above, a VPN cloud is an individual VPN or a group of VPNs for which a security policy may be defined. Each VPN cloud includes a list of sites under a sites node 234 and users under a users node 236, who can communicate with each other. A site is a set of hosts that are physically behind one of the policy enforcers 124, 126. The policy enforcers for the sites preferably act as VPN tunnel endpoints once the hosts under the sites start communicating.

The users in the VPN cloud are the users who may access the hosts associated with the sites 234. The users access the hosts as VPN clients using VPN client software installed in each user's personal computer as is described in further detail below.

Each VPN cloud 270 further includes a firewall rules node 276 including firewall rules to be applied all the connections in the cloud. The rules may govern, among other things, VPN access permissions, security features such as the level of encryption and authentication used for the connectivity at the network layer.

The hierarchical organization provided by the VPN clouds thus allows the network administrator to create fully meshed VPNs where every site within a VPN cloud has full connectivity with every other site. The network administrator need no longer manually configure each possible connection in the VPN, but only need to create a VPN cloud and specify the sites, users, and rules to be associated with the VPN. Each connection is then configured based on the configuration specified for the VPN cloud. The hierarchical organization thus facilitates the setup of a VPN with a large number of sites.

The network administrator preferably adds a new VPN cloud by actuating an add button 280. In response, the policy server 122 automatically creates the sites node 272, users node 274, and rules node 276 under the VPN cloud. The administrator then specifies the sites and users in the VPN.

According to one embodiment of the invention, the rules node 276 initially includes a default VPN rule 278 corresponding to the policy settings selected by the network administrator during setup of the policy server 122. The default VPN rule 278 allows unrestricted access between the hosts in the VPN.

The administrator may implement the access control within the VPN cloud by deleting the default rule 278 and adding specific firewall rules to the VPN. Such firewall rules allow the administrator to have fine grained access control over the traffic that flows through the VPN, all within the realm of the encrypted access provided by such VPN. The firewall rules are applied to the cleartext packet after it is decrypted or before it is encrypted.

According to one embodiment of the invention, the administrator selects the default rule 278 to effectuate such changes to the default rule. Selection of the default rule invokes a graphical user interface similar to the one illustrated in FIG. 8. The network administrator then fine tunes the access to the VPN by defining the firewall rules applicable to the VPN. The parameters in these firewall rules are preferably identical to the general firewall rules illustrated in FIG. 8.

Once a VPN cloud is configured, VPN membership information is dynamically created by the policy enforcers 124, 126 in the VPN. In this regard, each VPN site includes a tag identifying the hosts included in the site. At runtime, the policy enforcers 124, 126 for the respective sites associate IP addresses to the tag identifying the hosts in each site. This allows the IP addresses to be dynamically discovered without requiring static configuration of the IP addresses.

After the creation of the membership tables, any changes in the routing information is detected and notified to the member policy enforcers using a publish/subscribe process. The actual changes are retrieved by a policy enforcer by querying the LDAP database on the particular network that corresponds to the changed routing information.

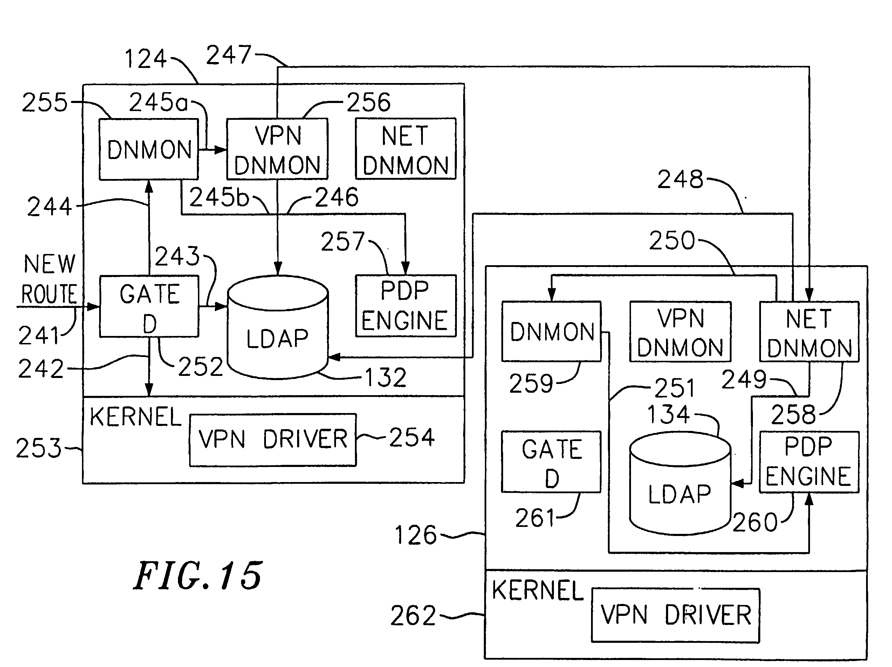

FIG. 15 is a schematic functional block diagram of policy enforcers 124, 126 at opposite ends of a VPN tunnel updating their respective routing information. As illustrated in FIG. 15, each policy enforcer 124, 126 includes a gated module 252, 261 configured as a daemon to run one or more routing protocols for exchanging routes on the network. Such routing protocols may include RIPv1, RIPv2, OSPF, and the like.

When a network administrator wishes to add a new route to the private local network 102 connected to policy enforcer 124, the administrator submits, in step 241, the new route to a gated module 252 in the policy enforcer 124. This is typically done by configuring a downstream of the policy enforcer to have an additional network. This information is then propagated by standard routing protocols to the gated module 252 of the policy enforcer 124. For example, the policy server 122 may publish the new route to the policy enforcer 124 with which the new route is to be associated. The route may be specified, for example, by an LDAP statement such as "LAN_Group@PR1," which specifies a new route from a policy enforcer PR1 to a LAN named LAN_Group. The gated module 252, in step 242, writes the new route to a kernel 253 of the policy enforcer including a VPN driver 254 so that the policy enforcer 124 can properly direct appropriate messages along the new route. Furthermore, the gated module 252, in step 243, writes the new route to its LDAP database 132.

The gated module 252 also provides, in step 244, the name of the new route to a distinguished name monitor (DNMonitor) daemon 255 configured to listen for updates in the LDAP database 132. The DNMonitor in turn notifies, in steps 245a, 245b, a VPN daemon 256 and a policy deployment point (PDP) engine 257 of the change in the LDAP database 132. The PDP engine then updates the modules that enforce the policies, with the change.

The VPN daemon 256, in step 246, uses the route name to access the LDAP database 132 to get the complete route information, a list of all VPNs to which the new route belongs, and a list of all other policy routers connected to those VPNs. In step 247, the VPN daemon 256 proceeds to send the new route name to each of the other policy routers.

When policy router 126 receives a new route name from policy router 124, its network daemon 258, in step 248, accesses the LDAP database 132 in the sending policy router 124 to obtain the complete new route information. If the new route belongs to more than one VPN and has different parameters for the different VPNs, routers on the different VPNs retrieve - different information corresponding to the individual VPNs.

In step 249, the network daemon 258 writes the new route information obtained in its own LDAP database 134 and provides it to its own DNMonitor module. As in the sending policy router 124, the DNMonitor module 259 in the receiving policy router 126 provides the new route information to its PDP engine 260 for updating its kernel 265 with the latest changes.

Although FIG. 15 has been described in connection with addition of a route to a policy enforcer and its associated VPNs, it should be readily apparent to those skilled in the art that essentially the same techniques may be applied to deletion of a route (for example, if a network component becomes inoperative or incommunicative), or change of a route (the policy router may recognize that a route already exists in a different form and simply overwrite it). In this way, the VPN system or systems can dynamically maintain routing information between its policy enforcers with minimal intervention by the system administrator.

### V. VIRTUAL PRIVATE NETWORK HAVING AUTOMATIC UPDATING OF CLIENT REACHABILITY INFORMATION

Remote users communicate over the public Internet 108 with the other members of the VPN behind policy enforcers 124, 126, upon presenting appropriate credentials. These remote users access the private networks as VPN clients 140 using a VPN client software. According to one embodiment of the invention, the system allows the remote user to download a self-extracting executable which, upon execution, installs both the VPN client software and VPN reachability information unique to the remote user in the user's remote terminal.

Each policy enforcer 124, 126 preferably maintains a copy of the self-extracting executable of the VPN client software including a setup program and VPN reachability configuration template. The setup program allows the VPN client software to be installed on the VPN client 140. When downloading the self-extracting executable, the configuration template is replaced with the VPN reachability information that is specific to the downloading user.

According to another embodiment of the invention, the system allows the VPN client 140 to download a self-extracting executable which, upon execution, only installs the VPN reachability information that is unique to the user. According to this embodiment, the VPN client software is already installed on the VPN client 140. In this scenario, the setup program allows the installation of the reachability information that is specific to the downloading user, on the VPN client 140.

According to a third embodiment of the invention, the system allows the VPN client 140 to automatically download the VPN reachability information each time it connects to the policy enforcer 124, 126. Thus, VPN reachability information is kept up-to-date for each VPN client 140. Once a VPN session is established, the connection between the VPN client 140 and the policy enforcer is assumed to already be secure. The VPN client preferably makes a common gateway interface (CGI) query to a web server running on the policy enforcer, and downloads the current VPN reachability information from the corresponding LDAP database.

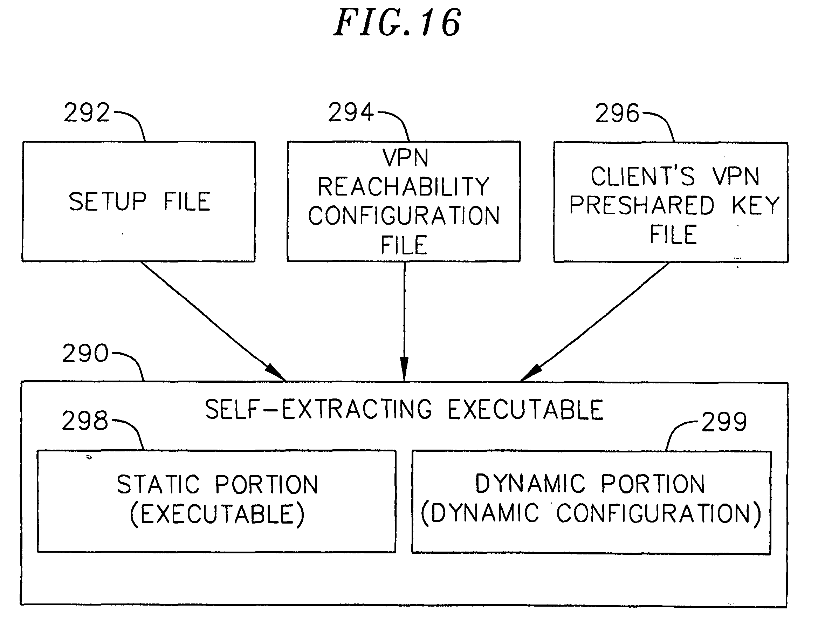

FIG. 16 is a block diagram of components in a self-extracting executable 290 according to one embodiment of the invention. The self-extracting executable 290 may be created using commercially available tools such as the INSTALLSHIELD EXEBUILDER of InstallShiled Software Corporation of Schaumburg, Illinois.

The self-extracting executable 290 preferably includes an executable setup file 292 for installing the VPN client software and/or the VPN configuration information. The setup file 292 preferably forms a static portion 298 of the self-extracting executable since this information does not change based on the downloading VPN client. The self-extracting executable 290 further includes VPN configuration file templates for the VPN reachability information 294 and the VPN client's preshared key information 296. The VPN reachability information 294 and the VPN client's preshared key 296 preferably form a dynamic portion 299 of the self-extracting executable 290 since this information changes based on the downloading VPN client. The self-extracting executable 290 is then saved as a template file in the policy enforcers 124, 126 and is ready to the downloaded by the remote users.

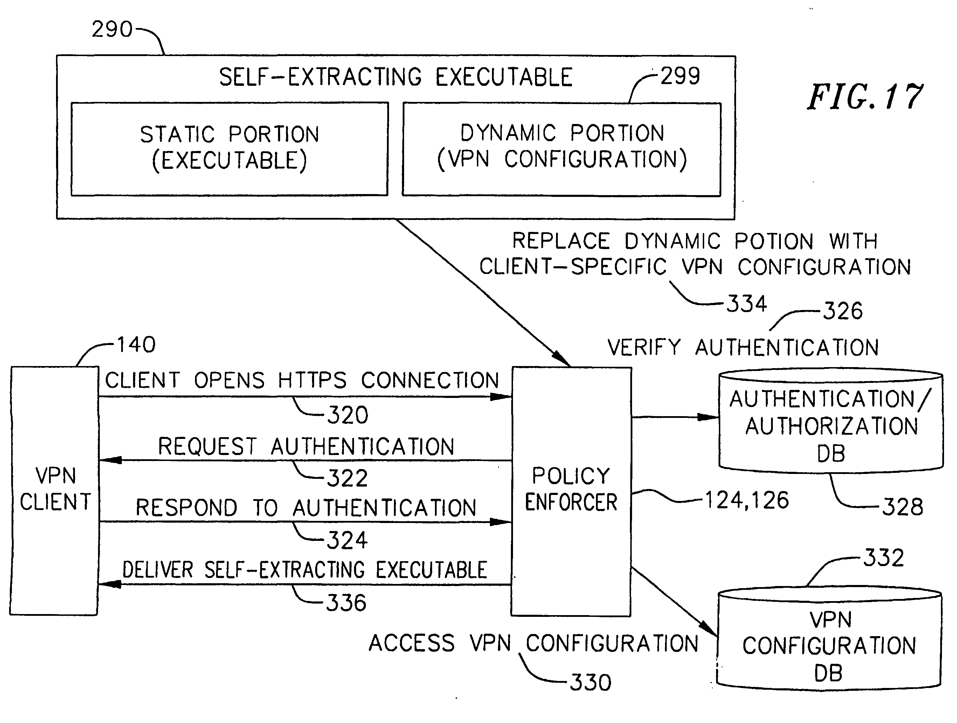

FIG. 17 is a functional block diagram for downloading the self-extracting executable 290 of FIG. 16 according to one embodiment of the invention. In step 320, a new VPN client 140 first establishes a secure communication session with the policy enforcer 124, 126 to download the self-extracting executable 290. Preferably, this is accomplished via an HTTPS protocol session on the VPN client's web browser or the like. In steps 322 and 324, the policy enforcer engages the VPN client in an authentication procedure where the policy enforcer requests, and the VPN client provides, his or her user name and password. In step 326, the policy enforcer compares the provided information with entries in its VPN client database 328. If the information is correct, the policy enforcer finds appropriate preshared keys for the user, and in step 330, also determines the VPN reachability information of the client from a VPN configuration database 332. The VPN client database 328 and VPN configuration database 332 may reside as part of a single LDAP database 312, 314 managed by the policy enforcer 124, 126, or may constitute separate LDAP databases.

In step 334, the policy enforcer replaces the dynamic portion 299 of the self-extracting executable 290 with the VPN reachability information and preshared key that is unique to the VPN client. The newly generated self-extracting executable is then downloaded to the VPN client 140 in step 336. When the executable is run, it either installs the VPN client software and/or the VPN reachability information.

Similar techniques may also be used for downloading a new and updated copy of the VPN configuration information to the VPN client each time the client connects to the policy enforcer and negotiates a session key. In addition, the user may obtain the latest configuration of the VPN network by expressly requesting the policy enforcer for such information. Thus, the VPN client need not be reinstalled and reconfigured each time updates are made to the VPN reachability information.

### VI. INTEGATED POLICY ENFORCER

According to one embodiment of the invention, the functionalities of the policy enforcer 124, 126 for policy enforcement are partitioned for effective hardware implementation. However, it should be apparent to one skilled in the art that some or all of the functionalities may be implemented in software, hardware, or various combinations thereof.

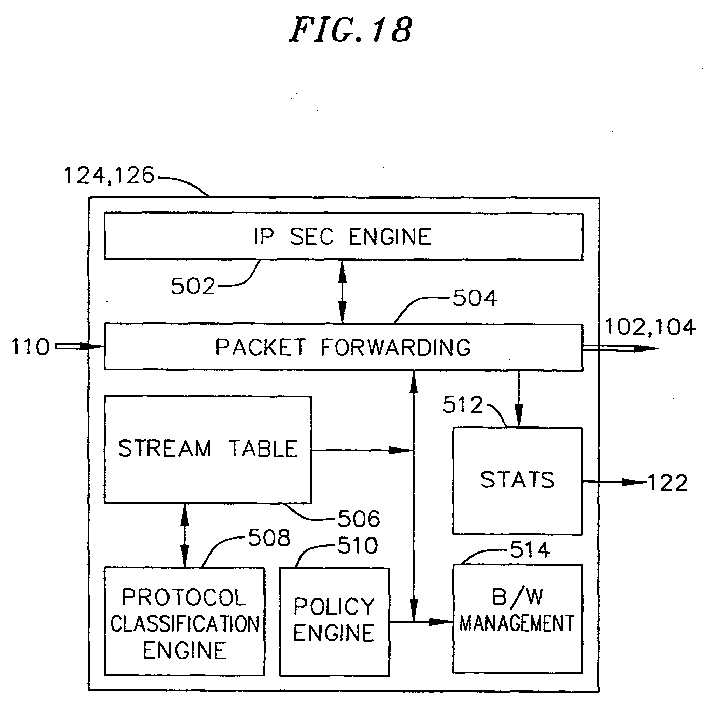

FIG. 18 is a schematic block diagram of the policy enforcer 124, 126 illustrating the partitioning of the various functionalities according to one embodiment of the invention. The policy enforcer includes an Internet protocol security (IPSec) engine 502 for performing security and authentication functions in implementing, for instance, virtual private networks. A stream table 506 assembles the packets passing through the policy enforcer into streams. A protocol classification engine 508 decodes the protocols used in forwarding the packets. A policy engine 510 enforces policies for the packets based on the policy settings stored in the policy database 132, 134. A packet forwarding module 504 receives packets from the public Internet via the router 110 and buffers, forwards, or drops the packets based on the policies being enforced. A bandwidth management module 514 provides bandwidth shaping services to the packets being forwarded based on the bandwidth settings stored in the policy database 132, 134.

In practice, an incoming packet is matched against the stream table 506 for determining if a matching entry already exists in the table. If not, a new entry is added. The stream table preferably includes enough portions of the packet to uniquely identify a stream. For example, in enforcing policies on IP layer three through layer four traffic, the stream table may store a source IP, destination IP, source port, destination port, and protocol number of the incoming packet.

The protocol classification engine 508 takes the new stream and obtains a detailed protocol decode for the stream. The policy engine 510 is then queried for the policy rules to be applied to the stream. Based on the policy rules returned by the policy engine 510, the packet forwarding module 504, IPSec engine 502, and/or the bandwidth management module 514 process the streams accordingly. The processing may be recursive until the packets in the stream have had all the actions specified by the policy rule set applied to them.

The policy enforcer also includes a statistics module 512 for collecting statistics on the packets forwarded through the local network as well as other status and resource usage information, and provides the same in logs and archives for sending to the policy server 122. According to one embodiment of the invention, the statistics module 512 keeps running byte counts of the packets passing through the network 102, 104. These byte counts may be automatically sorted by classes, such as classes based on certain resources (e.g. users, hosts, services), as well as by bytes that are blocked by policies and exceptions, such as firewall policies. In this regard, the statistics module 512 maintains in a cache a state table including a list of resources involved for each connection allowed through the firewall. For every packet flowing through the connection, the statistics module increments the packet and byte count for each of the resources in the list. The statistics module 512 then forwards the organized information to the policy server 122 which enters the information directly into tables organized by classes and aged out periodically.

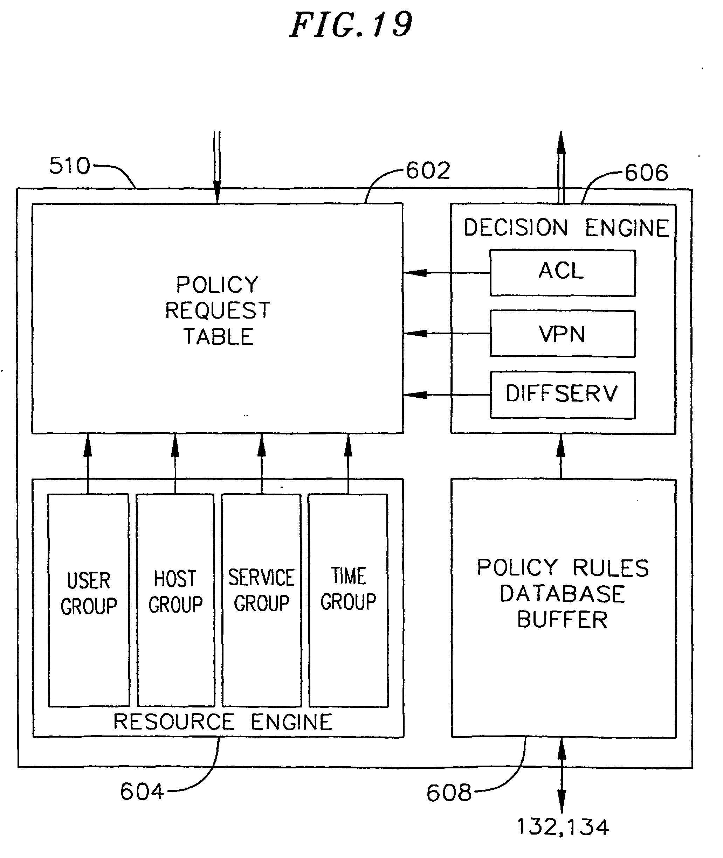

FIG. 19 is a more detailed schematic block diagram of the policy engine 510 according to one embodiment of the invention. The policy engine 510 includes a policy request table 602 that acts as a queue for all the policy decision requests. In this regard, the portion of the packet matching the information stored in the stream table 506 is presented to the policy engine 510 in the form of a policy request. The policy request is then queued in the policy request table 602.

A resource engine 604 maintains an up-to-date mapping of resource group names to member mappings. A policy rules database buffer 608 stores a current policy rule set to be applied by the policy engine 510. The policy rules stored in the buffer 608 are preferably in the original group-based rule specification format. Thus, the buffer 608 stores a rule created for a group in its group-based form instead of instantiating a rule for each member of the group.

A decision engine 606 includes logic to serve the incoming policy decision requests in the policy request table 602 by matching it against the policy rule set in the policy rules database buffer 608 based on the actual membership information obtained from the resource engine 604. The relevant group-based rule matching the traffic is then identified and decision bits in the stream table set for enforcing the corresponding actions. The decision bits thus constitute the set of actions to be performed on the packets of the stream. All packets matching the streams are then processed based on these decision bits. The decision engine may also specify an access control list (ACL) including a set of rules that allow/deny traffic, a DiffServ standard for providing a quality of service level to the traffic, and/or VPN implementation information.

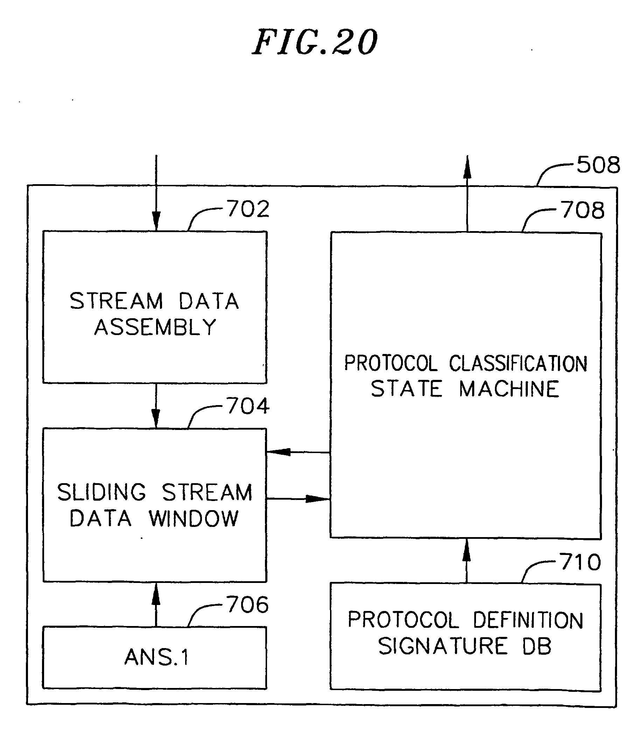

FIG. 20 is a more detailed schematic block diagram of the protocol classification engine 508 according to one embodiment of the invention. As illustrated in FIG. 20, the protocol classification engine 508 includes a stream data assembly 702, a sliding stream data window 704, an ASN.1 block 706, a protocol classification state machine 708, and a protocol definition signature database 710. The stream data assembly 702 extracts and re-assembles the data portion of an input packet stream and stores it in the sliding stream data window 704. Preferably, the sliding stream data window follows first-in-first-out protocols. The ASN.1 decoder further decodes the data stream, if needed, per conventional ASN.1 encoding/decoding standards. The protocol classification state machine 708 then matches the fully re-assembled and decoded data against the protocol definition signature database 710. This database 710 preferably holds a mapping of protocol names to data patterns to be found in the data stream. The matched protocol is then returned to the stream table 506.

Thus, the protocol classification engine 508 provides extensive layer three through layer seven protocol decode and packet classification, including complete identification of dynamic streams using a dynamically updated signature database compiled from scripted protocol definitions. As new protocols are defined in the future and/or users create their own custom applications with custom protocols, a need may arise to add recognition of these protocols to the protocol classification engine. The described protocol classification engine architecture allows such additions by simply adding a new scripted definition of the new protocol to the protocol classification engine without having to change the design each time a new protocol is added. This allows for custom protocol support and future protocol extensibility.

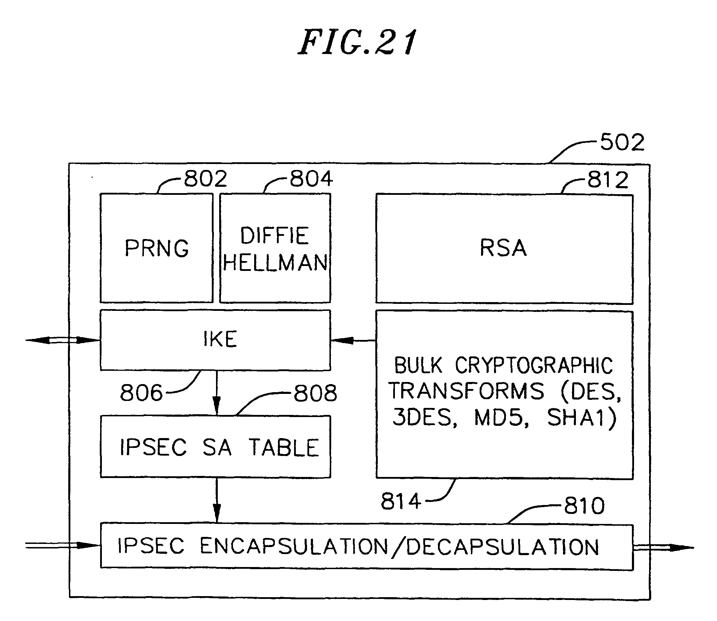

FIG. 21 is a more detailed schematic block diagram of the IPSec engine 502 according to one embodiment of the invention. As illustrated in FIG. 21, the IPSec engine 502 includes a Pseudo-Random Number Generator (PRNG) function 802 for generating random numbers used for cryptographic key generation according to well known methods. A Diffie Hellman 804 and RSA 812 blocks implement the corresponding asymmetric public key encryption/decryption/signature algorithms which are also well known in the art. An IKE block 806 communicates with an IPSec SA table 808 for implementing standard ISAKMP/Oakley(IKE) key exchange protocols. A cryptographic transforms block 814 implements standard symmetric encryption/decryption algorithms. An IPSec Encapsulation/Decapsulation block 810 performs standard encapsulation/decapsulation functions. Accordingly, the IPSec engine 502 provides mature, standards-based IKE/IPSec implementation with public key certificate support and necessary encryption/decryption functionality for packets passing through the private local networks 102, 104.

### VII. NETWORK POLICY LOGS AND STATISTICS AGGREGATION

Referring again to FIG. 3, the log collecting and archiving module 304 collects information about the status and usage of resources from the policy enforcers 124, 126 as well as from the management module 302, and stores them in the archive database 318. The policy server reports module 316 then uses the collected logs and archives to generate reports in an organized report format.

According to one embodiment of the invention, each policy enforcer 124, 126 maintains a log file with information collected about the flow of traffic through the policy enforcer as well as the status and usage of resources associated with the policy enforcer. All the log files follow a predefined common log format, preferably designed to create compact logs.

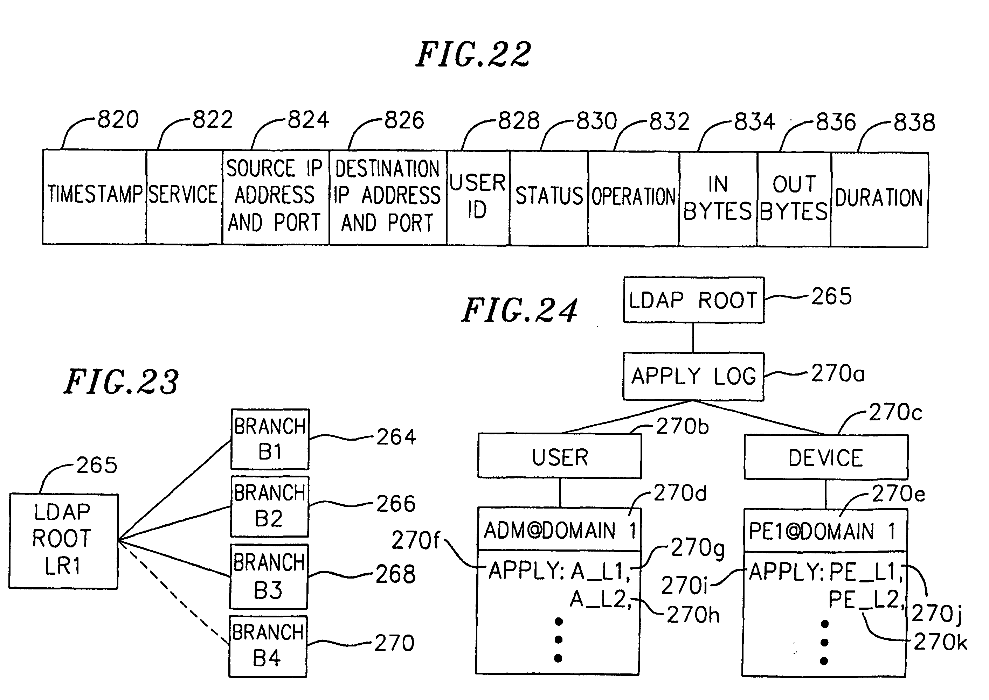

FIG. 22 is a schematic layout diagram of such a log format according to one embodiment of the invention. Each log entry includes a timestamp 820 in the format yyyymmddhhmmss, indicative of the year, month, date, hours, minutes, and seconds in which the log entry was created. A service field 822 indicates the type of service rendered by the policy enforcer 124, 126. Such services include VPN, FTP, Telnet, HTTP, packet filter, bandwidth, and the like. Each log entry further includes a source IP address and port 824 indicating the source from where a packet was received, as well as a destination IP address and port 826 indicating the destination to which the packet was forwarded.

A user ID field 828 identifies the user transmitting the packet. The user ID may be mapped to an entry in the LDAP database 130, 132, or 134 for obtaining additional details about the user.

A status field 830 indicates the status of an operation and may include a result code, error code, and the like. For example, for a packet filter service, the status field may include a result code "p" if the packet was passed or code "b" if the packet was blocked.

An operation field 832 indicates codes for a type of operation conducted by the service. For instance, operations for a VPN service may include sending packets and receiving packets. Operations for an FTP service may include GET and PUT operations. Operations for an HTTP service may include GET and POST operations.

In addition to the above, each log entry includes an in-bytes field 832 indicative of the number of bytes the policy enforcer received as a result of the activity, and an out-bytes field 834 indicative of the number of bytes transferred from the policy enforcer. Furthermore, a duration field 836 indicates the duration (e.g. in seconds) of the activity.

Certain fields of a particular log entry may be left blank if not applicable to a particular service. For instance, for an FTP download. Where there is no outgoing traffic, the out-bytes field is left blank. Furthermore, additional fields may be added based on the type of service being logged. For instance, for an HTTP activity, the URL that is accessed is also logged in the log entry. The additional fields are preferably appended to the end of the standard log format.

A person skilled in the art should recognize that additions, deletions, and other types of modifications may be made to the log format as long as the log format is common to all the policy enforcers and is aimed in creating compact logs.

The log files created by the policy enforcers 124, 126 are transferred to the policy server 122 based on archive options set by the policy server. In this regard, the network administrator specifies a threshold size for the logs created by the policy enforcers upon selection of the policy server archive option 752 of FIG. 9. When the log file exceeds the specified size, it is sent to the policy server 122. Preferably, the logs are transferred to the policy server 122 at least once a day even if the threshold size has not been exceeded. The logs may also be archived locally at the policy enforcer if so specified by the network administrator.

Once the policy server 122 receives the logs, it is stored in the archive database 318 preferably taking the form of an SQL database. The policy server reports module 316 queries this database to generate reports for each policy enforcer 124, 126. In addition, the logs may be exported in a format that may be interpreted by commercially available products such as WEBTRENDS, manufactured by WebTrends Corporation of Portland, Oregon.

The reports created by the reports module 316 include summary usage reports for the various resources including policy enforcers, users, services, hosts, and VPNs. For instance, the reports may include VPN summary reports, bandwidth summary reports, packet filter reports, and the like, for each policy enforcer.

The reports preferably show usage of each of the resources over a period time. The start and the end date for the report may be specified by the user. The user may further drill down on the time dimension and on the resource dimension for viewing specific times and specific resources. For instance, in creating the packet filter reports, the user may indicate a start and end time, source IP address, source port, destination IP address, and destination port. All packets meeting these criteria are then fetched from the archive database 318 and shown in a packet report.

### VIII. METHOD FOR SELECTIVE LDAP DATABASE SYNCHRONIZATION

According to one embodiment of the invention, the databases 130, 132, 134 in the unified policy management system of FIG. 1 are LDAP databases storing policy management information including policies for firewall, VPNs, bandwidth, administration, user records, network records, services, and the like. As described above, the LDAP directory service model is based on entries where each entry is a collection of attributes. Entries are arranged in a tree structure that follows a geographical and organizational distribution. Entries are named according to their position in the hierarchy by a distinguished name (DN).

The policy server 122 preferably stores the policy management information for all the policy enforcers in the policy server database 130. This information is organized in the databases 130 as one or more DNs with corresponding attributes. Appropriate portions of the policy server database are then copied to the policy enforcer databases 132, 134.

FIG. 23 is a block diagram of an LDAP tree structure including an LDAP root 265 and a plurality of branches 264, 266, 268, 270. According to one example, the policy server 122 maintains in the policy server database 130 branches 264 and 266 with policy management information for all the policy enforcers 124, 126. Each of the policy enforcers 124, 126 also maintain portions of the branches 264 and/or 266 in their respective policy enforcer databases 132, 134 as sub-trees of the policy server database 130. The portions of the branches maintained by each policy enforcer 124, 126 preferably relates to the configuration information for that policy enforcer as well as some additional information about the other policy enforcers. This additional information is used to communicate with the other policy enforcers.

The policy server 122 may further maintain branch 268 storing information used only by the applications running on the server and not shared with any of the policy enforcers 124, 126. Likewise, policy enforcers 124, 126 may maintain a portion of branch 268 containing information used only by the applications on each of the policy enforcers and not shared elsewhere. Typically, the data stored in branch 268 is dynamically generated and used by the applications running on the corresponding server or agent.

Branch 270 is preferably only included in the LDAP tree for the policy server database 130 and stores logged policy management changes that may be propagated to the policy enforcers 124, 126. Such changes may include, for example, addition, deletion, or modifications of a user on a device, VPN cloud, bandwidth policy, or firewall policy made by the network administrator via the various graphical user interfaces described above. Such changes result in the updating of the policy database 130 where the corresponding DN of the LDAP tree is added, deleted, or modified. The policy server 122 further creates a log of the changes and stores them in branch 270 for later distribution to the policy enforcers 124, 126.

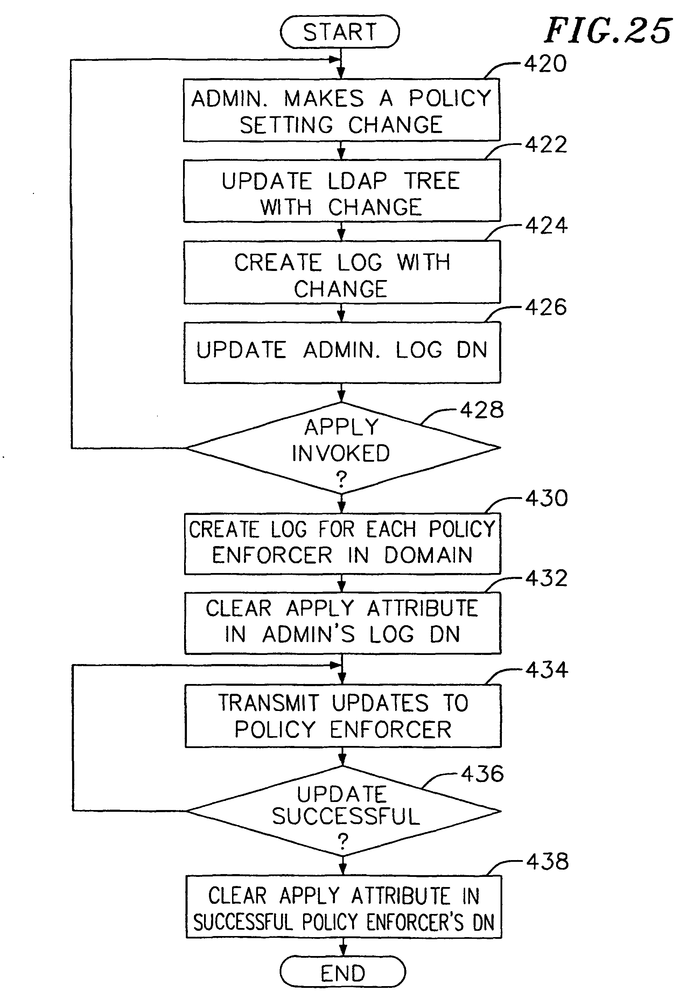

FIG. 24 is a more detailed block diagram of branch 270 of the LDAP tree of FIG. 23. The LDAP root 265 includes an ApplyLog 270a entry which in turn includes a user log entry 270b and a device log entry 270c. The user log entries include specific administrator log entries identified by specific DNs 270d for reflecting the changes made by the particular administrators. The device log entry 270c includes specific device log entries identified by specific DNs 270e reflecting the changes that are to be distributed to the particular policy enforces 124, 126. Preferably, the changes made by the administrators are propagated to the policy enforcers 124, 126 upon actuation of an apply button such as the apply button 417 illustrated in FIG. 6.

FIG. 25 is a flow diagram for logging and propagating LDAP changes to the policy enforcers according to one embodiment of the invention. In step 420, a particular network administrator makes a policy setting change. According to one example, the administrator is administrator "adm" working in the domain "domain1," and the change is the addition of a new user on a device.

In step 422, the change made the administrator is reflected in the policy server database 130. In this regard, branches 264 and 266 of the LDAP tree are modified accordingly to reflect the change in the policy setting. Additionally, in step 424, the policy server 122 creates a log of the changes for the administrator for later processing and sending to the appropriate policy agent. In step 426, the policy server 122 updates the administrator's log DN 270d to reflect the change.

In the above example and as illustrated in FIG. 24, if the log created is named "A_L1," the policy server 122 updates the DN 270d for "adm" at "domain1" to create an attribute "apply" 270f that has the value "A_L1" 270g. Other changes made by the administrator are reflected in separate logs (e.g. "A_L2," "A_L3") and appended to the existing value of the apply attribute in the administrator's log DN 270d.

In step 428, the policy server 122 checks whether the changes made by the administrator are to be propagated to the appropriate policy enforcers 124, 126. As discussed above, the changes are preferably propagated upon actuation of an apply button from the administrator's graphical user interface.

If the apply button has been actuated, the policy server creates, in step 430, a log for each policy enforcer to whom the change is to be transmitted. In this regard, the policy server 122 collects all the changes made by the administrator as reflected in the values 270g, 270h of the apply attribute 270f of the administrator's log DN 270d. These changes are processed for each policy enforcer belonging to the administrator's domain. Such processing preferably involves picking the relevant changes and suitably modifying the DNs for the policy enforcer's LDAP. Such suitable modifications may be necessary, for instance, due to the differences in the tree structures in the policy server database 130 and the policy enforcer databases 132, 134. For instance, a change in the administrator's log may contain a DN that specifies the domain name of the policy enforcer. In applying this change to the policy enforcer, the domain name would not be specified in the DN since the policy enforcer's tree structure does not include a domain name.

The changes suitably modified for each policy enforcer's LDAP are then stored in a device log. Each policy enforcer's log DN 270e is then modified to reflect the change to the transmitted to the particular policy enforcer. In the above example and as illustrated in FIG. 24, if the device log created is named "PE_L1," the policy server 122 updates the DN 270e for the particular policy enforcer "PE1" at "domain1" to create an attribute "apply" 270i that has the value "PE_L1" 270j.

In step 432, the apply attribute 270f for the administrator's log DN 270d is then deleted from the LDAP tree. In step 434, the changes collected for each policy enforcer, as reflected in the values 270j, 270k of the apply attribute 270i of the policy enforcer's log DN 270e, are transmitted to the policy enforcer for updating its database 132, 134. The changes are sent to the policy enforcers preferably over the HTTPS channel.

In step 436, the policy server 122 checks whether the updates have been successful. In this regard, the policy server 122 waits to receive an acknowledgment from the policy enforcer that the updates have been successfully completed. Upon a positive response from the policy enforcer, the policy server 122 deletes the apply attribute 270e for the policy enforcer's log DN 270e. Otherwise, if the update was not successful (e.g. because the policy enforcer was down), the apply log is re-sent the next time another apply function is invoked. Alternatively, the failed policy enforcer transmits a request to the policy server 122 of the log of non-applied changes when it rejoins the network (e.g. by rebooting).

### IX. STATE TRANSITION PROTOCOL FOR HIGH AVAILABILITY UNITS

According to one embodiment of the invention, the policy server 122, policy enforcers 124, 126, as well as other network devices may be configured for high availability by maintaining a backup unit in addition to a primary unit.

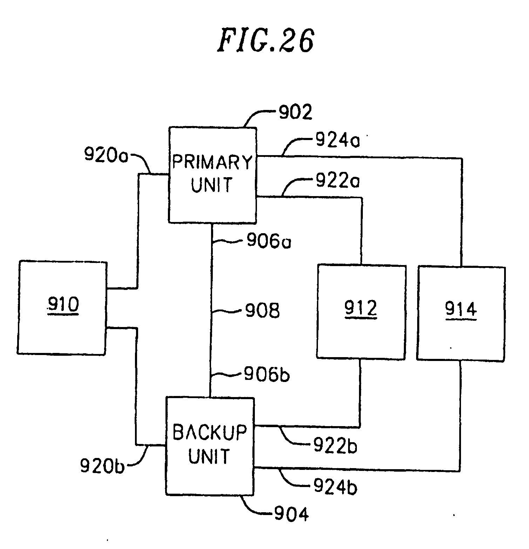

FIG. 26 is a schematic block diagram of a high availability system including a primary unit 902 and a backup unit 904.
The two units 902, 904 communicate with each other by exchanging heartbeats over parallel ports 906a, 906b and a cable 908. Such parallel ports 906a, 906b and cable 908 are conventional components that are commonly available in the art.

The primary unit 902 and the backup unit 904 are each similarly connected to other components 910, 912, 914 via ports 920a, 920b, 922a, 922b, 924a, 924b, respectively. These components 910, 912, 914 may be hubs, switches, connectors, or the like. Because the primary unit 902 and backup unit 904 provide similar services and functions and may be used interchangeably, each unit is preferably connected to the same components 910, 912, 914.

The parallel port cable 908 is preferably a conventional laplink cable designed to connect two parallel ports and allow communications between them. The primary unit 902 and the backup unit 904 preferably communicate with each other via TCP packets over the high-availability ports 906a, 906b. A point-to-point connection preferably exists between the primary unit 902 and the backup unit 904 over the high-availability ports 906a, 906b.

The primary unit 902 is preferably responsible for checking the status of its network ports for problems or failures. For example, if the primary unit 902 detects that one of its network ports is inoperable, e.g. port 922a, the primary unit 902 then checks whether the corresponding port 922b in the backup unit 904 is operational. Upon determining that the corresponding port 922b in the backup unit 904 is operational, the primary unit 902 sends a request to the backup unit 904 to take over the system functions as the active unit. The primary unit 902 then relinquishes its role as the active unit and shuts itself down, allowing the backup unit 904 to take on the responsibilities of the primary unit 902. When the primary unit 902 restarts operation, the backup unit 904 receives a request from the primary unit 902 to relinquish its role as the active unit.

When the primary unit 902 is active and does not detect any defects in its ports, it continuously listens on the high-availability port 906a to keep track of the status of the backup unit 904. The primary unit 902 continues to listen on the high-availability port 906a for signals coming from the backup unit 904. When the backup unit 904 is up and running, it connects to the primary unit 902. Once the connection is made, the backup unit 904 begins sending heartbeats to the primary unit 902. The backup unit 904 continuously sends heartbeats to the primary unit 902 in predetermined intervals. According to one embodiment of the invention, the backup unit 904 sends a AKeep Alive@ packet including a KEEP_ALIVE command to the primary unit 902 every one second.

The primary unit 902 responds to the "Keep Alive" packet by changing the command field of the packet to a KEEP_ALIVE_RESP command and re-transmitting the packet to the sender. If the backup unit 904 does not receive a response back from the primary unit 902 for a predetermined period of time (e.g. one second) for one "Keep Alive" packet, the backup unit 904 begins preparing to take over the active role. Preferably, the predetermined period should not be greater less than two consecutive "Keep Alive" packets.

Upon taking the role of the active unit, the backup unit 904 attempts to reestablish a connection with the primary unit 902 at regular intervals to determine whether the problem or failure in the primary unit has been cured. If the problem or failure has been cured, the backup unit 904 relinquishes its control to the primary unit 902 after setting the IP addresses of all the network interface cards to the assigned value.

In situations where the backup unit 904 takes over the active role from the primary unit 902, an alert/alarm is sent to the network administrator indicating such a change. In addition, if the primary unit 902 does not receive heartbeats from the backup unit 904, an alert/alarm is sent to the administrator indicating that the backup unit has failed.

A situation may arise when both the primary unit 902 and the backup unit 904 are fully functional, and the backup unit 904 desires to take over the active role. In this case, the backup unit 904 transmits a shut-down command to the primary unit 902 which then relinquishes control. The backup unit 904 continues its role as the active unit until the primary unit 902 transmits a request to the backup unit 904 to relinquish its active role.

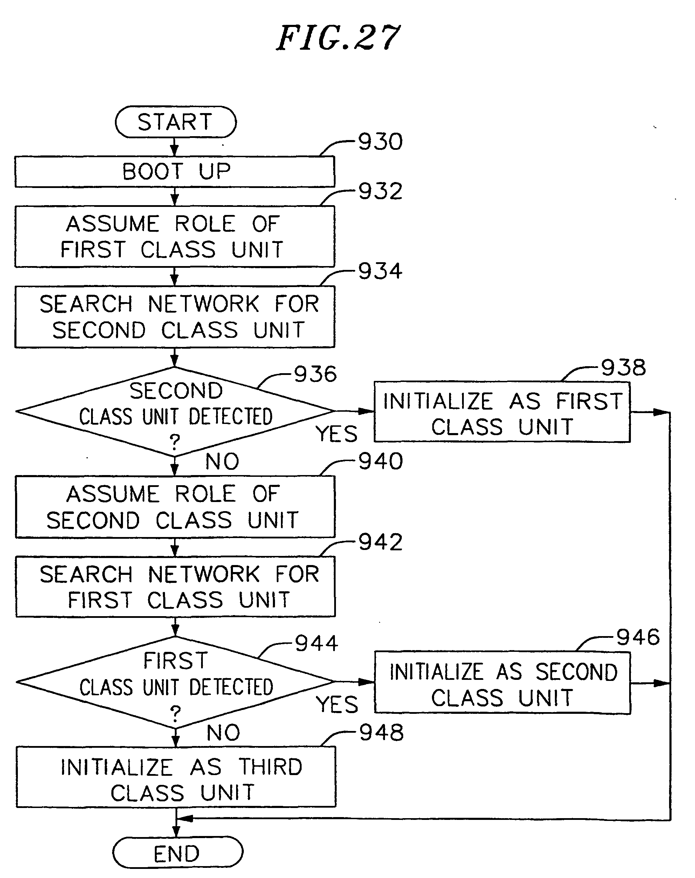

According to one embodiment of the invention, the initial status determination protocol of each high availability unit as a primary, backup, or stand-alone unit relies on a self-discovery process. FIG. 27 is a flow diagram of an exemplary status discovery process according to one embodiment of the invention. In step 930, a first high availability unit (unit X) that has not yet definitively discovered its status as a primary or a backup unit boots up, and in step 932 assumes the role of a backup unit. In step 934, unit X searches the network for a primary unit and inquires, in step 936, whether a primary unit has been detected. If the answer is YES, unit X tries to connect to the primary unit. If it is successful, unit X initializes as the backup unit in step 938. If, on the other hand, unit X does not detect the primary unit, unit X assumes the role of the primary unit in step 940.

In step 942, unit X searches the network for a backup unit. If the backup unit is detected, as inquired in step 944, unit X connects to the backup unit and initializes as the primary unit in step 946. If, on the other hand, unit X does not detect any other units in the network within a predetermined time, unit X initializes as a stand-alone unit in step 948.

Once the primary and secondary units have been initialized, configuration changes of the primary unit are also transferred to the backup unit in order to keep the two units synchronized. The configuration information is preferably stored in an LDAP database such as the central policy server database 130 or policy agent databases 124, 126.

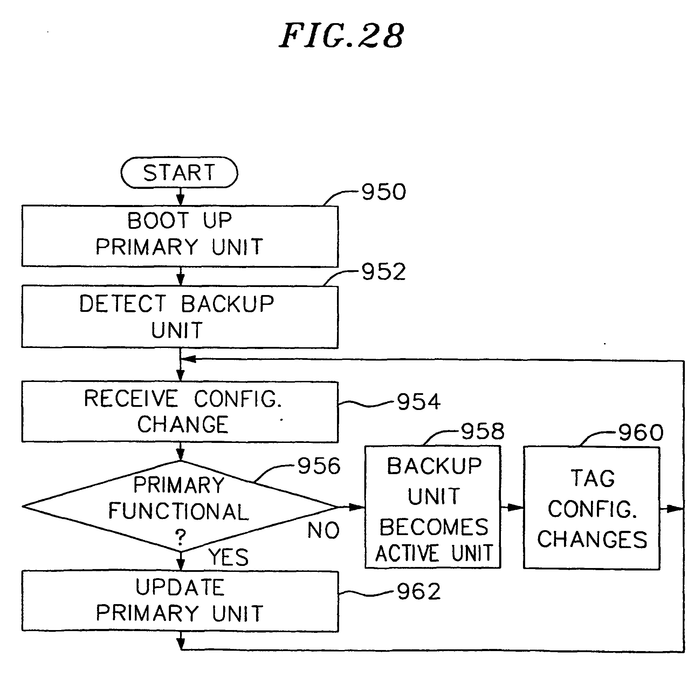

FIG. 28 is a flow diagram of a process for maintaining configuration information synchronized in the primary and backup units. In step 950, the primary unit boots up and in step 952, detects the backup unit. In step 954, the backup unit receives configuration change information from the primary unit if it is functional. Otherwise, the configuration changes are entered directly into the backup unit by the network administrator. If the configuration change is to be received from the primary unit, the primary unit notifies the backup unit when configuration changes occur in the primary unit. The changes are then transferred and applied to the backup unit. The backup unit in turn transmits the status of the transfer and the apply back to the primary unit.

In step 956, the primary unit is checked to determine whether it is functional. If it is, the primary unit is likewise updated with the configuration change. Otherwise, if the primary unit is not functional, the backup unit takes on the active role and becomes the active unit in step 958. The primary unit may become non-functional and thus, inactive, due failures in the CPU board, the network interface card, or power supply.

In step 960, the backup unit tags the changes to transfer them to the primary once the primary becomes functional. Once the primary unit becomes functional, the primary unit is updated with the tagged changes maintained by the backup unit as is reflected in step 962.

According to one embodiment of the invention, software updates on the primary and backup units are also synchronized so as to update the primary and backup units serially in a single cycle without the need for multiple update cycles. Thus, the network administrator need not duplicate the efforts of updating the backup unit with the same information as the primary unit.

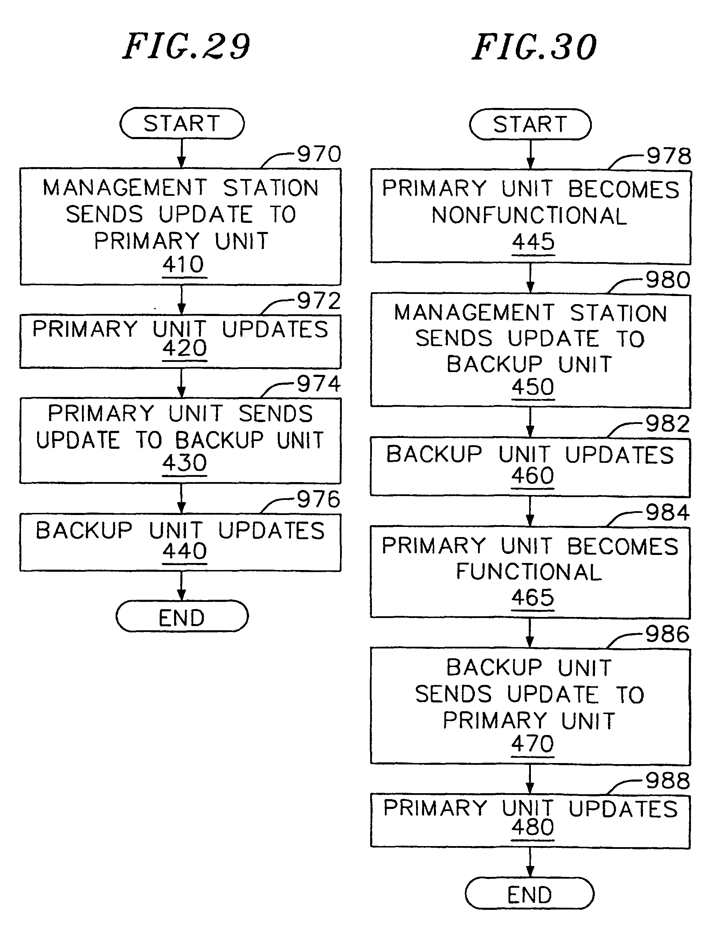

FIG. 29 is an exemplary flow diagram of updating the primary and backup units when they are both functional. In step 970, an update, such as a software update not stored in the LDAP databases, is sent/transmitted to the primary unit from a management station accessible by the network administrator. The primary unit then updates itself in step 972. In step 974, the primary unit automatically sends/transmits the update information to the backup unit. In step 976, the backup unit updates itself with the update information received from the primary unit.

FIG. 30 is an exemplary flow diagram of updating the primary and backup units when the primary unit is not functional. In step 978, the primary unit becomes nonfunctional, and in step 980, the network administrator sends/transmits an upgrade directly to the backup unit instead of the primary unit. In step 982, the backup unit updates itself with the information received from the management station and waits for the primary unit to become functional. Once the primary unit becomes functional, the update is automatically sent/transmitted to the primary unit for upgrading in step 986. The primary unit then updates itself in step 988.

Although the present invention has been described in detail with reference to the preferred embodiments thereof, those skilled in the art will appreciate that various substitutions and modifications can be made to the examples described herein.

For example, the unified policy management system of FIG. 1 should be viewed as illustrative rather than limiting. It should be apparent to those skilled in the art who are enlightened by the present invention that many alternative configurations are possible. For example, there may be additional networks with policy enforcers or no additional networks at all. Likewise, policy enforcers may not necessarily access the policy server through the Internet, but may be connected via other means such as a WAN, MAN, etc. In short, the number and type of users and resources within and without the organization can vary greatly while staying within the scope of the invention.

## Claims

1. A system for managing policy services in an organization, the organization including a first network (102) having a first set of resources and a second network (104) remote from the first network (102) having a second set of resources, the system comprising: a first edge device (124) associated with the first network (102), the first edge device (124) configured to manage policies for the first network (102) and the first set of resources in accordance with first policy settings, a second edge device (126) associated with the second network (104), the second edge device (126) configured to manage policies for the second network (104) and the second set of resources in accordance with second policy settings, and a central policy server (122) in communication with the first and second edge devices (124, 126), the central policy server (122) configured to generate the first and second policy settings and to manage the first and second edge devices (124, 126) from a single location, **characterized in that** the first and second networks (102, 104) are private networks, the first edge device (124) is configured to create a first table, the second edge device (126) is configured to create a second table, wherein the first and second table comprise information of member networks reachable through said edge devices (124, 126), respectively, said first and second edge devices (124, 126) are enabled to secure communication between the first and second private networks (102, 104) and the first edge device (124) shares the first table with the second edge device (126) and the second edge device (126) shares the second table with the first edge device (124), and **in that** the first table can be stored in a first database (132) and the second table can be stored in a second database (134).

2. The system of claim 1, wherein the first edge device (124) includes logic for: receiving a new route information; storing the new route information in the first database; and transmitting a portion of the new route information to the second edge device (126).

3. The system of claim 2, wherein the portion of the new route information is a route name.

4. The system of claim 2, wherein the second edge device (126) includes logic for: receiving the portion of the new route information; accessing the first database based on the portion of the new route information; retrieving the new route information from the first database; and storing the retrieved route information in the second database.

5. The system of claim 1, wherein communication between the first and second private networks (102, 104) can be managed according to a security policy associated with the networks.

6. The system of claim 5, wherein the security policy can be defined for a security group providing a hierarchical organization of the group, the group including member networks, users allowed to access the member networks, and a rule controlling access to the member networks.

7. The system of claim 6, wherein each member network has full connectivity with all other member networks and the security policy defined for the security policy group can automatically be configured for each connection.

8. The system of claim 6, wherein the security policy can provide encryption of traffic among the member networks and the rule is a firewall rule providing access control of the encrypted traffic among the member networks.

9. A method for use in a system for managing policy services in an organization, the organization including a first private network (102) having a first set of resources and a second private network (104) remote from the first network (102) having a second set of resources, the system comprising: a first edge device (124) associated with the first private network (102), the first edge device (124) configured to manage policies for the first private network (102) and the first set of resources in accordance with first policy settings, a second edge device (126) associated with the second private network (104), the second edge device (126) configured to manage policies for the second private network (104) and the second set of resources in accordance with second policy settings, and a central policy server (122) in communication with the first and second edge devices (124, 126), the central policy server (122) configured to generate the first and second policy settings and to manage the first and second edge devices (124, 126) from a single location, said method being **characterized by** the steps: the first and second edge devices (124, 126) enabling secure communication between the first and second private networks (102, 104), the first edge device (124) creating a first table with information of member networks reachable through the first edge device (124), storing the first table in a first database (132), the second edge device (126) creating a second table with information of member networks reachable through the second edge device (126), storing the second table in a second database (134), sharing the first table with the second edge device (126) and sharing the second table with the first edge device (124).

10. The method of claim 9 further comprising: receiving a new route information; storing the new route information in the first database; and transmitting a portion of the new route information to the second edge device (126).

11. The method of claim 10, wherein the portion of the new route information is a route name.

12. The method of claim 10 further comprising: receiving the portion of the new route information; accessing the first database based on the portion of the new route information; retrieving the new route information from the first database; and storing the retrieved route information in the second database.

13. The method of claim 9, wherein communication between the first and second private networks (102, 104) is managed according to a security policy associated with the networks.

14. The method of claim 13 further comprising defining the security policy for a security policy group, the group providing a hierarchical organization of the group including member networks, users allowed to access the member networks, and a rule controlling access to the member networks.

15. The method of claim 14, wherein each member network has full connectivity with all other member networks and the security policy defined for the security policy group is automatically configured for each connection.

16. The method of claim 14, wherein the security policy provides encryption of traffic among the member networks and the rule is a firewall rule providing access control of the encrypted traffic among the member networks.

## Patentansprüche

1. Ein System zum Management von Policy-Diensten in einer Organisation, wobei die Organisation ein erstes Netz (102) mit einem ersten Satz Ressourcen sowie ein zweites Netz (104) umfasst, das von dem ersten Netz (102) entfernt ist und einen zweiten Satz Ressourcen aufweist, wobei das System umfasst: eine erste Kanteneinrichtung (124), die dem ersten Netz (102) zugeordnet ist, wobei die erste Kanteneinrichtung (124) konfiguriert ist, um die Policies für das erste Netz (102) und den ersten Satz Ressourcen in Übereinstimmung mit den ersten Policy-Einstellungen zu verwalten, eine zweite Kanteneinrichtung (126), die dem zweiten Netz (104) zugeordnet ist, wobei die zweite Kanteneinrichtung (126) konfiguriert ist, um die Policies für das zweite Netz (104) und den zweiten Satz Ressourcen in Übereinstimmung mit den zweiten Policy-Einstellungen zu verwalten, sowie einen zentralen Policy-Server (122), der mit der ersten und der zweiten Kanteneinrichtung (124, 126) verbunden ist, wobei der zentrale Policy-Server (122) konfiguriert ist, um die ersten und die zweiten Policy-Einstellungen zu erstellen und die erste und zweite Kanteneinrichtung (124, 126) von einem einzigen Standort aus zu verwalten,
**dadurch gekennzeichnet, dass** es sich bei dem ersten und dem zweiten Netz (102, 104) um private Netze handelt, die erste Kanteneinrichtung (124) konfiguriert ist, um eine erste Tabelle zu erstellen, die zweite Kanteneinrichtung (126) konfiguriert ist, um eine zweite Tabelle zu erstellen, wobei die erste und die zweite Tabelle Informationen über die Mitgliedsnetze beinhalten, die jeweils über die genannten Kanteneinrichtungen (124, 126) erreichbar sind, wobei die genannte erste und zweite Kanteneinrichtung (124, 126) in der Lage sind, die Kommunikation zwischen dem ersten und zweiten privaten Netz (102, 104) zu gewährleisten und die erste Kanteneinrichtung (124) die erste Tabelle gemeinsam mit der zweiten Kanteneinrichtung (126) nutzt und die zweite Kanteneinrichtung (126) die zweite Tabelle gemeinsam mit der ersten Kanteneinrichtung (124) nutzt, sowie **dadurch**, dass die erste Tabelle in einer ersten Datenbank (132) gespeichert werden kann und die zweite Tabelle (134) in einer zweiten Datenbank gespeichert werden kann.

2. Das System aus Anspruch 1, wobei die erste Kanteneinrichtung (124) eine Logik umfasst: zum Empfang einer neuen Streckeninformation, zur Speicherung der neuen Streckeninformation in der ersten Datenbank und zur Übermittlung eines Anteils der neuen Streckeninformation an die zweite Kanteneinrichtung (126).

3. Das System aus Anspruch 2, wobei es sich bei dem Anteil der neuen Streckeninformation um einen Streckennamen handelt.

4. Das System aus Anspruch 2, wobei die zweite Kanteneinrichtung (126) eine Logik umfasst: zum Empfang des Anteils der neuen Streckeninformation, für den Zugriff auf die erste Datenbank auf der Basis des Anteils an der neuen Streckeninformation, zum Abrufen der neuen Streckeninformation aus der ersten Datenbank und zum Speichern der abgerufenen Streckeninformation in der zweiten Datenbank.

5. Das System aus Anspruch 1, wobei die Kommunikation zwischen dem ersten und dem zweiten privaten Netz (102, 104) gemäß einer den Netzen zugeordneten Sicherheitspolicy verwaltet werden kann.

6. Das System aus Anspruch 5, wobei die Sicherheitspolicy für eine Sicherheitsgruppe definiert werden kann, die eine hierarchische Gruppenorganisation aufweist, wobei die Gruppe Mitgliedsnetze, Nutzer, denen der Zugang zu den Mitgliedsnetzen gewährt wird, und eine Regel, die den Zugang zu den Mitgliedsnetzen steuert, umfasst.

7. Das System aus Anspruch 6, wobei jedes Mitgliedsnetz über die vollständige Connectivity mit allen anderen Mitgliedsnetzen verfügt und die Sicherheitspolicy, die für die Sicherheitspolicy-Gruppe definiert wurde, automatisch für jede Verbindung konfiguriert werden kann.

8. Das System aus Anspruch 6, wobei die Sicherheitspolicy die Verschlüsselung des Datenverkehrs zwischen den Mitgliedsnetzen bieten kann und es sich bei der Regel um eine Firewall-Regel handelt, die die Zugangskontrolle des verschlüsselten Datenverkehrs unter den Mitgliedsnetzen gewährleistet.

9. Ein verfahren zum Einsatz in einem System zum Management von Policy-Diensten in einer Organisation, wobei die Organisation ein erstes privates Netz (102) mit einem ersten Satz Ressourcen sowie ein zweites privates Netz (104) umfasst, das von dem ersten Netz (102) entfernt ist und einen zweiten Satz Ressourcen aufweist, wobei das System umfasst: eine erste Kanteneinrichtung (124), die dem ersten privaten Netz (102) zugeordnet ist, wobei die erste Kanteneinrichtung (124) konfiguriert ist, um die Policies für das erste private Netz (102) und den ersten Satz Ressourcen in Übereinstimmung mit den ersten Policy-Einstellungen zu verwalten, eine zweite Kanteneinrichtung (126), die dem zweiten privaten Netz (104) zugeordnet ist, wobei die zweite Kanteneinrichtung (126) konfiguriert ist, um die Policies für das zweite private Netz (104) und den zweiten Satz Ressourcen in Übereinstimmung mit den zweiten Policy-Einstellungen zu verwalten, und einen zentralen Policy-Server (122) der mit der ersten und der zweiten Kanteneinrichtung (124, 126) verbunden ist, wobei der zentrale Policy-Server (122) konfiguriert ist, um die ersten und die zweiten Policy-Einstellungen zu erstellen und die erste und zweite Kanteneinrichtung (124, 126) von einem einzigen Standort aus zu verwalten, wobei das genannte Verfahren durch die folgenden Schritte **gekennzeichnet** ist: die erste und zweite Kanteneinrichtung (124, 126) ermöglichen die sichere Kommunikation zwischen dem ersten und dem zweiten privaten Netz (102, 104), die erste Kanteneinrichtung (124) erstellt eine erste Tabelle mit Informationen über die Mitgliedsnetze, die über die erste Kanteneinrichtung (124) erreichbar sind, und speichert die erste Tabelle in einer ersten Datenbank (132), die zweite Kanteneinrichtung (126) erstellt eine zweite Tabelle mit Informationen über die Mitgliedsnetze, die über die zweite Kanteneinrichtung (126) erreichbar sind, und speichert die zweite Tabelle in einer zweiten Datenbank (134), die erste Tabelle wird gemeinsam mit der zweiten Kanteneinrichtung (126) genutzt und die zweite Tabelle wird gemeinsam mit der ersten Kanteneinrichtung (124) genutzt.

10. Das Verfahren aus Anspruch 9, das außerdem umfasst: den Empfang einer neuen Streckeninformation, die Speicherung der neuen Streckeninformation in der ersten Datenbank und die übermittlung eines Anteils der neuen Streckeninformation an die zweite Kanteneinrichtung (126).

11. Das Verfahren aus Anspruch 10, wobei es sich bei dem Anteil der neuen Streckeninformation um einen Streckennamen handelt.

12. Das Verfahren aus Anspruch 10, das außerdem umfasst: den Empfang des Anteils der neuen Streckeninformation, den Zugriff auf die erste Datenbank auf der Basis des Anteils der neuen Streckeninformation, den Abruf der neuen Streckeninformation aus der ersten Datenbank und die Speicherung der abgerufenen Streckeninformation in der zweiten Datenbank.

13. Das Verfahren aus Anspruch 9, wobei die Kommunikation zwischen dem ersten und dem zweiten privaten Netz (102, 104) entsprechend einer den Netzen zugeordneten Sicherheitspolicy verwaltet wird.

14. Das Verfahren aus Anspruch 13, das außerdem die Definition einer Sicherheitspolicy für eine Sicherheitspolicy-Gruppe umfasst, wobei die Gruppe eine hierarchische Organisation der Gruppe, bestehend aus Mitgliedsnetzen, Nutzern, denen der Zugang zu den Mitgliedsnetzen gewährt wird, und einer Regel, die den Zugang zu den Mitgliedsnetzen steuert, bietet.

15. Das Verfahren aus Anspruch 14, wobei jedes Mitgliedsnetz über die vollständige Connectivity mit allen anderen Mitgliedsnetzen verfügt und die Sicherheitspolicy, die für die Sicherheitspolicy-Gruppe definiert wurde, für jede Verbindung automatisch konfiguriert wird.

16. Das Verfahren aus Anspruch 14, wobei die Sicherheitspolicy die Verschlüsselung des Datenverkehrs zwischen den Mitgliedsnetzen bietet und es sich bei der Regel um eine Firewall-Regel handelt, die die Zugangskontrolle des verschlüsselten Datenverkehrs zwischen den Mitgliedsnetzen gewährleistet.

## Revendications

1. Système destiné à gérer des services de politiques dans une entreprise, l'entreprise incluant un premier réseau (102) comportant un premier ensemble de ressources et un second réseau (104) distant du premier réseau (102) comportant un second ensemble de ressources, le système comprenant : un premier dispositif de frontière (124) associé au premier réseau (102), le premier dispositif de frontière (124) étant configuré pour gérer des politiques pour le premier réseau (102) et le premier ensemble de ressources conformément à une première configuration de politiques, un second dispositif de frontière (126) associé au second réseau (104), le second dispositif de frontière (126) étant configuré pour gérer des politiques pour le second réseau (104) et le second ensemble de ressources conformément à une seconde configuration de politiques et un serveur central de politiques (122) en communication avec le premier et le second dispositifs de frontière (124, 126), le serveur central de politiques (122) étant configuré pour générer la première et la seconde configurations de politiques et pour gérer le premier et le second dispositifs de frontière (124, 126) à partir d'un seul emplacement, **caractérisé en ce que** le premier et le second réseaux (102, 104) sont des réseaux privés, le premier dispositif de frontière (124) est configuré pour créer une première table, le second dispositif de frontière (126) est configuré pour créer une seconde table, dans lequel la première et la seconde tables comprennent des informations des réseaux membres accessibles par l'intermédiaire desdits dispositifs de frontière (124, 126), respectivement, lesdits premier et second dispositifs de frontière (124, 126) sont validés pour sécuriser les communications entre le premier et le second réseaux privés (102, 104) et le premier dispositif de frontière (124) partage la première table avec le second dispositif de frontière (126) et le second dispositif de frontière (126) partage la seconde table avec le premier dispositif de frontière (124) et **en ce que** la première table peut être mémorisée dans une première base de données (132) et la seconde table peut être mémorisée dans une seconde base de données (134).

2. Système selon la revendication 1, dans lequel le premier dispositif de frontière (124) inclut une logique pour : recevoir des informations sur une nouvelle route ; mémoriser les informations sur la nouvelle route dans la première base de données ; et transmettre une partie des informations sur la nouvelle route au second dispositif de frontière (126).

3. Système selon la revendication 2, dans lequel la partie des informations sur la nouvelle route est un nom de route.

4. Système selon la revendication 2, dans lequel le second dispositif de frontière (126) inclut une logique pour : recevoir la partie des informations sur la nouvelle route ; accéder à la première base de données en fonction de la partie des informations sur la nouvelle route ; récupérer les informations sur la nouvelle route dans la première base de données ; et mémoriser les informations récupérées sur la route dans la seconde base de données.

5. Système selon la revendication 1, dans lequel les communications entre le premier et le second réseaux privés (102, 104) peuvent être gérées selon une politique de sécurité associée aux réseaux.

6. Système selon la revendication 5, dans lequel la politique de sécurité peut être définie pour un groupe de sécurité fournissant une organisation hiérarchique du groupe, le groupe incluant des réseaux membres, des utilisateurs autorisés d'accéder aux réseaux membres et une règle contrôlant l'accès aux réseaux membres.

7. Système selon la revendication 6, dans lequel chaque réseau membre possède une connectivité complète avec tous les autres réseaux membres et la politique de sécurité définie pour le groupe de politiques de sécurité peut être automatiquement configurée pour chaque connexion.

8. Système selon la revendication 6, dans lequel la politique de sécurité peut assurer le cryptage du trafic parmi les réseaux membres et la règle est une règle de pare-feu assurant le contrôle d'accès du trafic crypté parmi les réseaux membres.

9. Procédé à utiliser dans un système destiné à gérer des services de politiques dans une entreprise, l'entreprise incluant un premier réseau privé (102) comportant un premier ensemble de ressources et un second réseau privé (104) distant du premier réseau (102) comportant un second ensemble de ressources, le système comprenant : un premier dispositif de frontière (124) associé au premier réseau privé (102), le premier dispositif de frontière (124) étant configuré pour gérer des politiques pour le premier réseau privé (102) et le premier ensemble de ressources conformément à une première configuration de politiques, un second dispositif de frontière (126) associé au second réseau privé (104), le second dispositif de frontière (126) étant configuré pour gérer des politiques pour le second réseau privé (104) et le second ensemble de ressources conformément à une seconde configuration de politiques et un serveur central de politiques (122) en communication avec le premier et le second dispositifs de frontière (124, 126), le serveur central de politiques (122) étant configuré pour générer la première et la seconde configurations de politiques et pour gérer le premier et le second dispositifs de frontière (124, 126) à partir d'un seul emplacement, ledit procédé étant **caractérisé par** les étapes : le premier et le second dispositifs de frontière (124, 126) validant des communications sécurisées entre le premier et le second réseaux privés (102, 104), le premier dispositif de frontière (124) créant une première table avec des informations de réseaux membres accessibles par l'intermédiaire du premier dispositif de frontière (124), mémorisant la première table dans une première base de données (132), le second dispositif de frontière (126) créant une seconde table avec des informations de réseaux membres accessibles par l'intermédiaire du second dispositif de frontière (126), mémorisant la seconde table dans une seconde base de données (134), partageant la première table avec le second dispositif de frontière (126) et partageant la seconde table avec le premier dispositif de frontière (124).

10. Procédé selon la revendication 9 comprenant en outre : recevoir des informations sur une nouvelle route ; mémoriser les informations sur la nouvelle route dans la première base de données ; et transmettre une partie des informations sur la nouvelle route au second dispositif de frontière (126).

11. Procédé selon la revendication 10, dans lequel la partie des informations sur la nouvelle route est un nom de route.

12. Procédé selon la revendication 10 comprenant en outre : recevoir la partie des informations sur la nouvelle route; accéder à la première base de données en fonction de la partie des informations sur la nouvelle route ; récupérer les informations sur la nouvelle route dans la première base de données ; et mémoriser les informations récupérées sur la route dans la seconde base de données.

13. Procédé selon la revendication 9, dans lequel les communications entre le premier et le second réseaux privés (102, 104) sont gérées selon une politique de sécurité associée aux réseaux.

14. Procédé selon la revendication 13 comprenant en outre définir la politique de sécurité pour un groupe de politiques de sécurité, le groupe fournissant une organisation hiérarchique du groupe incluant des réseaux membres, des utilisateurs autorisés à accéder aux réseaux membres et une règle contrôlant l'accès aux réseaux membres.

15. Procédé selon la revendication 14, dans lequel chaque réseau membre possède une connectivité complète avec tous les autres réseaux membres et la politique de sécurité définie pour le groupe de politiques de sécurité est automatiquement configurée pour chaque connexion.

16. Procédé selon la revendication 14, dans lequel la politique de sécurité assure le cryptage du trafic parmi les réseaux membres et la règle est une règle de pare-feu assurant le contrôle d'accès du trafic crypté parmi les réseaux membres.
